# EUROPÄISCHE PATENTSCHRIFT

(11) **EP 4 041 696 B1**
(45) Veröffentlichungstag und Bekanntmachung des Hinweises auf die Patenterteilung: **03.06.2026**
(21) Anmeldenummer: 20789957.6
(22) Anmeldetag: 09.10.2020
(51) Int. Cl.: C04B 35/563, B28B 1/00, C04B 35/565, C04B 35/80, C04B 37/00, B33Y 10/00

(54) **VERFAHREN ZUR HERSTELLUNG EINES KERAMISCHEN FASERVERBUNDBAUTEILS**
METHOD FOR MAKING A CERAMIC FIBER COMPOSITE COMPONENTS
PROCÉDÉ POUR LA FABRICATION DE COMPOSANTS COMPOSITES À BASE DE FIBRES CÉRAMIQUES

(30) Priorität: 11.10.2019 DE 102019215661
(43) Veröffentlichungstag der Anmeldung: 17.08.2022
(73) Patentinhaber: Brembo SGL Carbon Ceramic Brakes GmbH, 86405 Meitingen (DE)
(72) Erfinder: KIENZLE, Andreas, 86405 Meitingen (DE); SCHWENKE, Almut, 86405 Meitingen (DE); AUST, Daniel, 86405 Meitingen (DE); OETTINGER, Oswin, 86405 Meitingen (DE)
(74) Vertreter: Fabiano, Piero
(86) Internationale Anmeldenummer: PCT/EP2020/078508
(87) Internationale Veröffentlichungsnummer: WO 2021/069722

(56) Entgegenhaltungen:
- EP-A1- 3 431 459
- EP-A1- 3 453 505
- DE-A1- 4 438 456
- DE-C2- 4 438 456

## Beschreibung

Die vorliegende Erfindung betrifft ein Verfahren zur Herstellung eines keramischen Faserverbundbauteils.

Carbonfaserverstärkte siliziumcarbidkeramische Materialien kombinieren die Eigenschaften van Carbonfasern und einer keramischen SiC Matrix. Dadurch entsteht ein Material mit hoher Härte, hoher Verschleißbeständigkeit, hoher Bruchzähigkeit, geringer thermischer Ausdehnung sowie exzellenter chemischer Beständigkeit bei hohen Temperaturen. Keramische Bremsschreiben, welche carbonfaserverstärkte siliziumcarbidkeramische Materialien umfassen, sind heutzutage im Serieneinsatz. Allerdings ist die Fertigung sehr aufwendig und insbesondere die Herstellung komplexer Bauteile sehr zeit-, material- und damit kostenintensiv.

Additive Fertigungstechniken wie 3D Druck ermöglichen eine hohe Designfreiheit und die flexible Herstellung von Kleinserien. Pulverbasierte monolithische Keramik ist jedoch spröde. Ein Einbringen von langen verstärkenden Fasern während des Druckens ist bei gängigen 3D Druckverfahren für Keramikpulver, wie Binder Jetting oder Pastenextrusion, aber bisher quasi nicht möglich. Dies gilt insbesondere für Fasern, deren Lange die Durchmesser der Partikel überschreitet, die für den Druck verwendet werden. In der EP3453505A1 ist ein Verfahren zur Herstellung einer Verbundkomponente beschrieben. Das Verfahren umfasst das zumindest teilweise Bedecken eines Kerns mit einem organischen Bindemittel und mindestens einer Siliziumkomponente mit einem verstärkenden Fasermaterial, wobei der Kern mindestens einen Abschnitt mit einer nichtlinearen Geometrie umfasst. Das Verfahren umfasst ein Infiltrationsprozess mit einem Keramikmatrix-Vorläufermaterial, das Polymerimrägnierung und Pyrolise ist.

Die Aufgabe der vorliegenden Erfindung besteht darin, ein einfaches und wirtschafliches Verfahren zur Herstellung eines keramischen Faserverbundbauteils mit reduzierten Abfällen bereitzustellen, wobei das Bauteil mit sehr hoher Härte, sehr hoher Verschleißbeständigkeit, und hoher Bruchzähigkeit, hoher Schadenstoleranz, geringer thermischer Ausdehnung und hoher chemischer Beständigkeit in beliebig komplexer Form mit geringem Aufwand zugänglich gemacht wird.

Diese Aufgabe wird durch ein Verfahren nach dem Anspruch 1 gelöst.

Das erfindungsgemäße Verfahren ist ein Verfahren zur Herstellung eines keramischen Faserverbundbauteils und umfasst die folgenden Schritte:
a) Bereitstellen eines kohlenstaffbasierten und/oder keramischen, z.B. siliziumcarbidbasierten oder borcarbidbasierten Körpers, welcher mittels additiver Fertigung hergestellt worden ist,
b) Behandlung eines Verstärkungselements und/oder des bereitgestellten Körpers bei einer Temperatur von mindestens 600°C, bevorzugt mindestens 800°C, besonders bevorzugt mindestens 1400°C oder mindestens 1600°C bevor das Anbringen des Verstärkungselements an dem Körper erfolgt,
c) Anbringen eines faserhaltigen Verstärkungselements am Körper,
d)Verbinden von Körper und Verstärkungselement durch Infiltration mit Silizium oder mit einer siliziumhaltigen Verbindung, und
e)falls in Schritt d) das Verbinden durch Infiltration mit einer siliziumhaltigen Verbindung erfolgt, wird anschließend eine Temperaturbehandlung in einem Bereich von größer 400 °C durchgeführt.

Die Temperaturbehandlung im Schritt e) istvorzugsweise in einem Bereich von 400 bis 1200 °C, bevorzugter in einem Bereich von 800 bis 1200 °C, durchgeführt.

Bei den unter Schritt e) genannten Temperaturbereichen bildet sich Siliziumcarbid.

Der in Schritt a) bereitgestellte Körper kann ein kohlenstoffbasierter Körper und/oder ein keramischer Körper sein. Für den keramische Körper kommt prinzipiell jede Keramik in Betracht, die mittels additiver Fertigung ausgehend von einem Pulver (und Binder) in einen Körper überführt werden kann, soweit sie den Bedingungen in Schritt d) standhält. Vorzugsweise steht Keramik hierin für Siliziumcarbid oder Borcarbid oder deren Mischungen. Der in a) bereitgestellte Körper kann demnach bevorzugt ein kohlenstoffbasierter und/oder siliziumcarbidbasierter oder borcarbidbasierter Körper sein, welcher mittels additiver Fertigung hergestellt worden ist. Insbesondere kann der in a) bereitgestellte Körper aus einer Mischung aus Koks und Siliziumcarbid mittels additiver Fertigung hergestellt worden sein. Die Art des verwendeten Koks ist hierbei nicht besonders eingeschränkt; es können unter anderem Kokse wie Steinkohlenteerpechkoks, Petrolkoks, Acetylenkoks, Flexikoks, Fluidkoks oder Shot Coke, bevorzugt Flexikoks, eingesetzt werden. Die Herstellung und die vorteilhaften Eigenschaften durch die Verwendung von Koksen wird in der WO 2017/089499 A1 beschrieben. Ist der Körper in Schritt a) durch eine Mischung aus Kohlenstoff und Siliziumcarbid hergestellt worden, so weist das erfindungsgemäßbereitgestellte keramische Faserverbundbauteil ein niedrigeres Gewicht als ein Faserverbundbauteil auf, bei dem in Schritt a) ausschließlich SiC-Pulver verwendet wurde; diese erfindungsgemäß bereitgestellten Faserverbundbauteile sind bedingt durch die niedrigeren Rohstoffkosten von Kohlenstoff im Vergleich zu SiC günstiger. Die erfindungsgemäß bereitgestellten borcarbidkeramischen Faserverbundbauteile verbinden die besonderen Vorteile eines sehr niedrigen Gewichts, einer sehr großen Härte und einer hohen Bruchzähigkeit. Folglich eignen sich die erfindungsgemäß, ausgehend von borcarbidbasierten Körpern hergestellten Faserverbundbauteile hervorragend als ballistischer Schutz für mobile Anwendungen, insbesondere als ballistischer Schutz für Personen.

Die Angabe, dass der Körper kohlenstoffbasiert und/oder keramisch, z.B. siliziumcarbidbasiert oder borcarbidbasiert ist, bedeutet, dass der Körper mindestens zu 50 Gew.-%, bevorzugt mindestens zu 70 Gew.-% und ganz besonders bevorzugt zu mindestens 90 Gew.-% aus Kohlenstoff und/oder Keramik, z.B. Siliziumcarbid und oder Borcarbid, besteht. Die hier angegebenen Massenanteile beziehen sich auf den Körper, wie er aus der additiven Fertigung erhalten wird, also noch vor der Anbringung des Verstärkungselements und vor einer Infiltration des Körpers mit weiterer Substanz. Die Massenanteile beziehen sich dabei auf das Verhältnis der Summe der Massenanteile an Kohlenstoff und Keramik, z.B. Siliziumcarbid und/oder Bordcarbid, bezogen auf die Gesamtmasse des in Schritt a) bereitgestellten Körpers. Da Kohlenstoff im Zusammenhang mit der vorliegenden Erfindung amorphen Kohlenstoff und Graphit meint, geht in den Anteil an Kohlenstoff sowohl amorpher Kohlenstoff als auch Graphit ein, also jeglicher Kohlenstoff unabhängig von dessen Kristallinitätsgrad.

Der in Schritt a) bereitgestellte Körper ist mittels additiver Fertigung erhältlich oder hergestellt worden. Bestimmte Ausführungsformen des erfindungsgemäßen Verfahrens umfassen eine noch vor Schritt a) erfolgende additive Fertigung des Körpers. Es ist jedoch auch möglich, die durch additive Fertigung erhältlichen oder hergestellten

Körper, die in Schritt a) bereitgestellt werden, zuzukaufen oder vom erfindungsgemäßen Verfahren räumlich getrennt und/oder zeitlich entkoppelt herzustellen. Die additive Fertigung des Körpers kann also optional vom erfindungsgemäßen Verfahren umfasst sein.

Der in Schritt a) bereitgestellte Körper kann gekauft oder mit in WO 2017/089494 A1, WO 2017/089499 A1, WO 2017/089500 A1, WO 2019/063831 A2, WO 2015/038260 A2, DE 10 2014 216 433 A1, DE 2006 015 014 A1 oder DE 10 2012 2019 989A1 beschriebenen Techniken hergestellt werden. Er kann auch so hergestellt sein, wie beschrieben in: Moon J. et al., Fabrication of functionally graded reaction infiltrated SiC-Si composite by three-dimensional printing (3DP™) process, Materials Science and Engineering: A, 31 Januar 2001, Band 298, Nr. 1-2, Seiten 110-119. Eine Fülle verschiedener, sehr gut geeigneter additiv gefertigter Körper können von SGL Carbon gekauft werden.

Der in Schritt a) bereitgestellte Körper umfasst vorzugweise Partikel mit einer mittleren Größe (d50) im Bereich von 10-500 µm. Die daraus resultierende hohe Porosität des Körpers begünstigt die Infiltration in Schritt d), insbesondere wenn flüssiges Silizium infiltriert wird. Für die Bestimmung des d50-Werts kann die lasergranulometrische Methode (ISO 13320) eingesetzt werden, wobei ein Messgerät der Sympatec GmbH mit zugehöriger Auswertesoftware verwendet wird. Im bestehenden Körper kann die Partikelgröße aus dem Schliffbild bestimmt werden, z.B. lichtmikroskopisch.

Unter additiver Fertigung wird in bevorzugten erfindungsgemäßen Verfahren Binder Jetting oder Pastenextrusion verstanden. In einem besonders bevorzugten erfindungsgemäßen Verfahren ist der in Schritt a) bereitgestellte Körper mittels Binder Jetting hergestellt worden oder mittels Binder Jetting erhältlich.

Beim Binder Jetting wird ein pulverförmiges Ausgangsmaterial an ausgewählten Stellen mit einem Binder verklebt, um so den Körper zu erzeugen. Dies bewirkt, dass der Körper pulverbasiert, hochporös, weitgehend isotrop und homogen ist. Homogen bedeutet hierbei, dass der Formkörper keine Dichtegradienten aufweist, so wie es z.B. bei der Formgebung durch Pressung der Fall ist. Das Fügebindemittel dringt in die Poren ein und gewährleistet eine feste Anbringung des Verstärkungselements am Körper in Schritt c). Die Infiltration in Schritt d) sorgt dann für eine besonders feste Verbindung von Verstärkungselement und Körper. Es ergibt sich somit eine durchgehende verbindende Si-Phase vom Grundkörper über die Fügebindemittelzone bis in das Verstärkungselement hinein.

Der beim Binder Jetting verwendete Binder wird hierin als Jetting-Binder bezeichnet. Es können organische oder anorganische Jetting-Binder verwendet werden, wobei z.B. Wasserglas als anorganischer Jetting-Binder und z.B. Phenolharz oder Furanharz als organische Jetting-Binder gut verwendbar sind. Beim Binder Jetting wird ein Körper mit einem Feststoffanteil von größer 80 Gew.-%, bevorzugt größer 90 Gew.-% erhalten.

Bei der Pastenextrusion wird eine Extrusionspaste in definierter Weise in einem vorgegebenen Muster abgelegt, um so den Körper zu erzeugen. Das Ablegen der Extrusionspaste kann dabei schichtweise aus einem extrudierten Strang erfolgen. Die Extrusionspaste enthält Kohlenstoffpartikel und/oder Keramikpartikel, z.B. Siliziumcarbidpartikel. Außerdem enthalt die Extrusionspaste Binder. Der in der Extrusionspaste enthaltene Binder unterliegt keinen besonderen Beschränkungen. Bevorzugt ist in der Extrusionspaste ein carbonisierbarer Binder enthalten, z.B., Phenolharz, Furanharz, Benzoxazinharz, Pech, Cellulose, Starke, Zucker, Polyvinylalkohol (PVA), Thermoplaste wie z.B. Polyacryletherketone und insbesondere Polyetheretherketon (PEEK) und/oder Polyimid.

Das faserhaltige Verstärkungselement unterliegt keinen besonderen Beschränkungen. Als faserhaltiges Verstärkungselement kommt prinzipiell jede Faser und jedes faserhaltige Material und jede faserhaltige Masse in Betracht, welche(s) sich gemäß der Verfahrensschritte c) und d) mit dem Körper zu einem erfindungsgemäß bereitgestellten keramischen Faserverbundbauteil weiterverarbeiten lässt.

Faser meint im Zusammenhang mit der vorliegenden Erfindung vorzugsweise Carbonfaser oder Siliziumcarbidfaser, besonders bevorzugt Carbonfaser. Dementsprechend bedeutet "faserhaltig" vorzugsweise "carbonfaserhaltig" oder "siliziumcarbidfaserhaltig", besonders bevorzugt "carbonfaserhaltig". Carbonfaser zeichnet sich im Vergleich zu Siliziumcarbidfaser durch eine höhere Kosteneffizienz aus. Hingegen ist die Siliziumcarbidfaser oxidationsstabiler gegenüber der Carbonfaser und sie weist eine thermische Ausdehnung auf, welche besser zu der SiC-Matrix passt.

Gemäß der vorliegenden Erfindung kommt jeder Art der Anbringung des Verstärkungselements am Körper in Betracht, die den Bedingungen standhalt, welche beim nachfolgenden Verfahrensschritt d) vorherrschen. Das Verstärkungselement wird am Körper bevorzugt mit einem Fügebindemittel angebracht. Wie aus den nachfolgenden Ausführungen zu formbaren und starren faserhaltigen Verstärkungselementen und Anbringungsmethoden deutlich wird, kann als Fügebindemittel bevorzugt das im Verstärkungselement ohnehin enthaltene Bindemittel und/oder ein zusätzlich einzubringendes Bindemittel dienen.

Das in Schritt c) bereitgestellte faserhaltige Verstärkungselement kann formbar sein. Dies ist in der Regel dann der Fall, wenn das faserhaltige Verstärkungselement ein Bindemittel enthält, das noch nicht ausgehartet ist. Die Fasern können mit dem Bindemittel benetzt oder in dem Bindemittel aufgenommen sein. Konkrete Beispiele solcher formbaren Verstärkungselemente sind
- eine Harz und Fasern enthaltende Masse, die hierin auch als "Harz-Faser- Masse" bezeichnet ist,
- ein mindestens teilweise harzgetränktes textiles Flächengebilde (solche Flächengebilde sind als "Prepregs" käuflich erhältlich, z.B. van SGL Carbon)
- ein harzgetränkter Faserstrang.

Das verwendete Harz für die Herstellung solcher formbaren Verstärkungselemente weist nach der Pyrolyse eine Kohlenstoffausbeute von vorzugsweise mindestens 10 %, bevorzugter von mindestens 20 % und nach bevorzugter von mindestens 40 % auf.

Das formbare Verstärkungselement muss jedoch kein Bindemittel enthalten, wie z.B. bei Flechtschläuchen, bei denen ein Körper mit Fasern umflochten wird. Nach dem Anbringen kann eine Imprägnierung mit Bindemittel erfolgen. Anschließend kann eine Carbonisierung und dann Schritt d) erfolgen.

Das Anbringen dieser farmbaren Verstärkungselemente am Körper kann dann z.B. erfolgen durch Pressen mithilfe einer Pressfarm (Anbringungsmethode 1), Aufsprühen mittels Faserspritzen (Anbringungsmethode 2), Aufpressen mittels Vakuumsackverfahren (Anbringungsmethode 3) und/oder Autoklavverfahren (Anbringungsmethode 4), oder Umwickeln des Körpers mit dem faserhaltigen Verstärkungselement (Anbringungsmethode 5). Vakuumsackverfahren und Autoklavverfahren sind beschrieben in Drechsler, K., Heine, M., Mitschang, P., Baur, W., Gruber, U., Fischer, L., Öttinger, O., Heidenreich, B., Lützenburger, N. und Voggenreiter, H. (2009), Carbon Fiber Reinforced Composites, in Ullmann's Encyclopedia of Industrial Chemistry, (Ed.)., in Abschnitt 2.3.3. Es versteht sich für den Fachmann von selbst, welche der vorgenannten Anbringungsmethoden 1 bis 5 für die oben aufgelisteten formbaren Verstärkungselemente zur Anbringung am Körper jeweils geeignet sind. Die Anbringung am Körper geht beim formbaren Verstärkungselement im Allgemeinen mit einer Veränderung der Form des Verstärkungselements einher. Das Verstärkungselement kann beim Anbringen an den Körper einer Kontur des Körpers flexibel angepasst werden.

Formbare Verstärkungselemente lassen es zu, die Form des Körpers ohne Rücksicht auf die Form eines starren Verstärkungselements zu optimieren. Es ist dann nicht erforderlich, einen Körper mit einer Oberfläche bereitzustellen, die spezifisch an die Oberflache eines gegebenen, starren Verstärkungselements angepasst ist. Da das Bindemittel, z.B. Harz, formbarer Verstärkungselemente im Moment der Anbringung am Körper noch nicht ausgehärtet ist, kann es zugleich als Fügebindemittel dienen.

Das in Schritt c) bereitgestellte faserhaltige Verstärkungselement kann auch starr sein. Starr ist das faserhaltige Verstärkungselement z.B. dann, wenn das faserhaltige Verstärkungselement ausgehärtetes Bindemittel, eine Kohlenstoffmatrix und/oder eine keramische Matrix enthält. Konkrete Beispiele starrer faserhaltiger Verstärkungselemente sind
- faserverstärkte Kohlenstoffelemente, z.B. carbonfaserverstärkte Kohlenstoffelemente, insbesondere
   ∘ faserverstärkte Kohlenstoffplatten, z.B. carbonfaserverstärkte Kohlenstoffplatten (CFC-Platten)
   ∘ faserverstärkte Kohlenstoffringe, z.B. carbonfaserverstärkte Kohlenstoffringe (CFC-Ringe)
   ∘ faserverstärkte Kohlenstoffstäbe, z.B. carbonfaserverstärkte Kohlenstoffstäbe (CFC-Stäbe)
      und
- Carbonfaserverstärkte siliziumcarbidkeramische Elemente, insbesondere
   ∘ carbonfaserverstärkte siliziumcarbidkeramische Platten
   ∘ carbonfaserverstärkte siliziumcarbidkeramische Ringe
   ∘ carbonfaserverstärkte siliziumcarbidkeramische Stäbe

Das starre faserhaltige Verstärkungselement kann auch ein faserverstärktes Kunststoffelement sein, z.B. ein carbonfaserverstärktes Kunststoffelement.

Das Anbringen dieser starren Verstärkungselemente am Körper kann insbesondere erfolgen durch Aufpressen auf eine Oberflache des Körpers (insbesondere wenn das starre Verstärkungselement eine Platte ist), Umlegen des Körpers (insbesondere wenn das starre Verstärkungselement ein Ring ist) oder Einlegen in eine Ausnehmung des Körpers (insbesondere wenn das starre Verstärkungselement ein Stab, Gitter oder ein Ring ist). Da das Bindemittel eines starren Verstärkungselements im Allgemeinen ausgehartet ist und nicht mehr als Fügebindemittel dienen kann, kann zur Anbringung des Körpers weiteres Fügebindemittel zugeführt werden.

Das Fügebindemittel, das zur Anbringung des Verstärkungselements am Körper zugeführt oder zusätzlich zu einem im formbaren Verstärkungselement enthaltenen Bindemittel zugeführt werden kann, kann z.B. ein Harz enthalten, insbesondere ein Phenolharz, ein Furanharz, ein Benzoxazinharz, ein Bismaleinimidharz, einen Zucker, ein Pech oder eine siliziumorganische Verbindung, wie z.B. ein siliziumhaltiges Polymer, z.B. ein Polysiloxan, ein Polycarbosilan, ein Polysilan oder ein Polysilazan.

Erfindungsgemäß werdenin Schritt b) Verstärkungselement und/oder der Körper bei einer Temperatur von mindestens 600 °C, bevorzugt mindestens 800 °C, besonders bevorzugt mindestens 1400 °C, z.B. mindestens 1600 °C behandelt, bevor das Anbringen des Verstärkungselements an dem Körper erfolgt. Dies hat den Vorteil, dass bei der nachfolgenden Infiltration in Schritt d) keine oder nur noch eine geringfügige weitere Pyrolyse erfolgt. Ein Teil des in Schritt d) erfolgenden Schrumpfens wird dadurch schon vor dem Anbringen vorweggenommen. Außerdem wird die Heizzone bzw. der Ofen, in dem Schritt d) im Allgemeinen durchgeführt wird, dadurch sehr gut vor einer Verunreinigung geschützt. Mit Stillstand verbundene Reinigungsintervalle können verkürzt und dadurch die erfindungsgemäß bereitgestellten keramischen Faserverbundbauteile noch effizienter produziert werden. Erste Versuche deuten klar darauf hin, dass sich dadurch außerdem der Ausschuss bei der Fertigung der Faserverbundbauteilen verringern lässt. Es wird vermutet, dass mechanische Spannungen im Bereich der entstehenden Verbindung von Körper und Verstärkungselement auf ein Minimum reduziert werden. Deshalb ist auf diese Weise die Herstellung nach stabilerer Faserverbundbauteile mit besonders geringem Ausschuss möglich.

Die Temperatur von mindestens 1400 °C bezieht sich auf die Schmelztemperatur van Reinsilizium und gilt insbesondere, wenn in Schritt d) flüssiges Reinsilizium infiltriert wird. Allgemein gilt, dass Verstärkungselement und/oder Körper besonders bevorzugt bei einer Vorbehandlungstemperatur behandelt werden, bevor das Anbringen des Verstärkungselements an dem Körper erfolgt, wobei die Vorbehandlungstemperatur höchstens 300 K, insbesondere höchstens 200 K, z.B. höchstens 100 K unter der höchsten Temperatur liegt, die in Schritt d) erreicht wird.

Das Fügebindemittel kann z.B. ein Bindemittel sein, das beim Erhitzen in N₂-Atmosphäre eine Materialausbeute von mindestens 20 Gew.-%, bevorzugt von mindestens 40 Gew.-%, hat. Dies wird getestet, indem man ca. einen Milliliter Fügebindemittel wiegt, in N₂-Atmosphäre mit einer Heizrate van 1K/Minute bis auf 900 °C erhitzt und die Probe dann weitere 10 Minuten unter N₂-Atmospare auf 900 °C hält. Der Rückstand wird erneut gewogen. Wenn die Masse bei der zweiten Wägung mindestens 20 % der Masse bei der ersten Wägung ergibt, beträgt die Materialausbeute mindestens 20 Gew.-%. Vorzugsweise betragen die Massenanteile an C und Si im Rückstand insgesamt mindestens 40 Gew.-%, vorzugsweise mindestens 90 Gew.-%, z.B. mindestens 95 Gew.-%. Dies bewirkt, dass sich in Verfahrensschritt d) Siliziumcarbid auch im Übergangsbereich van Verstärkungselement und Körper besonders gut bildet. Dadurch wird die Festigkeit der erfindungsgemäß bereitgestellten keramischen Faserverbundbauteile weiter gesteigert. Handelt es sich bei dem Fügebindemittel um eine im folgenden Absatz näher beschriebene Paste, so beziehen sich die obigen Angaben zur Materialausbeute auf den flüssigen Anteil des Fügebindemittels. Feste Bestandteile trennt man dann vor der Bestimmung der Materialausbeute ab, z.B. durch Zentrifugation.

Vorzugsweise ist das Fügebindemittel eine Kohlenstoff- und/oder Siliziumcarbidpartikel und/oder Fasern mit einer mittleren Länge van höchstens 3mm enthaltende Paste, z.B. mit einem Massenanteil an Partikeln und/oder Fasern von insgesamt 10-90 Gew.-%, insbesondere 30-70 Gew.-%. Die in der Paste enthaltenen Fasern können z.B. Kurzschnittfasern oder gemahlene Fasern sein. Kurzschnittfasern werden erzeugt, indem man van einem Faserstrang lauter gleich lange Abschnitte abtrennt. Gemahlene Fasern werden erzeugt, indem man Fasern mahlt.

Mit der Paste werden die thermomechanischen Eigenschaften von Körper und Verstärkungselement aneinander angeglichen, wobei die Partikel und Fasern der Paste, die zwischen den in Kontakt stehenden Flächen liegenden Hohlräume ausfüllen können. Die in Schritt d) zwischen Körper und Verstärkungselement auftretenden thermischen Spannungen scheinen vom sich bildenden keramischen Faserverbundbauteil dann besser aufgenommen zu werden. Dadurch wird eine höhere mechanische Belastbarkeit des Bauteils erreicht sowie eine höhere Formstabilität.

Der Einsatz von weniger Paste hilft hingegen, die Dimensionsgenauigkeit zu erhalten. Vor diesem Hintergrund kann der Fachmann die Menge der Paste so wählen, dass die Dimensionsgenauigkeit möglichst hoch wird, ohne jedoch zu große mechanische Spannungen in den erzeugten Verbundbauteilen zu bewirken.

Dieerfindungsgemäß bereitgestellten keramischen Faserverbundbauteile, die sehr große, auf Paste zurückgehende Volumenanteile umfassen, sind weniger bevorzugt. Denn im fertigen keramischen Faserverbundbauteil sind die auf die Paste zurückgehenden Bereiche im Allgemeinen weniger belastbar, als die auf faserhaltige Verstärkungselemente zurückgehenden Bereiche. Vorzugsweise ist das Fügebindemittel eine Paste, die höchstens 10 % des Gesamtvolumens des nach Schritt c) vorliegenden Faserverbundbauteils einnimmt. Die hier angegebene Obergrenze von 10 % bezieht sich auf Fügebindemittelvolumen, die zusätzlich zu einem im Verstärkungselement optional enthaltenen Bindemittel vorliegen. Sind in dem keramischen Faserverbundbauteil mehrere Körper und/oder mehrere Verstärkungselemente verbaut, gehen in die Berechnung der maßgeblichen Volumenanteile sämtliche Körper, sämtliche Verstärkungselemente und sämtliche auf Pasten zurückgehenden Bereiche ein.

Vor oder nach Schritt c) können Körper und/oder Verstärkungselement durch chemische Gasphaseninfiltration (CVI) und/oder durch Infiltration mit carbonisierbarer Substanz und anschließender Carbonisierung verdichtet werden (sogenannte "Verdichtung").

Unter Carbonisierung wird hierin eine Pyrolyse in nicht oxidierender Atmosphäre, z.B. in N₂-Atmosphäre, verstanden.

Als carbonisierbar wird jede Substanz bezeichnet, die sich in N₂-Atmosphäre beim Erhitzen in einen Rückstand zersetzen lässt, dessen Massenanteil an Kohlenstoff höher ist, als in der Substanz. Dies wird getestet, indem man einen Milliliter der Substanz in N₂-Atmosphäre mit einer Heizrate van 1KIMinute bis auf 900 °C erhitzt und die Probe dann weitere 10 Minuten unter N₂-Atmospäre auf 900 °C hält. Den Massenanteil an Kohlenstoff bestimmt man vor und nach dem Erhitzen jeweils durch Elementaranalyse. Beispiele carbonisierbarer Substanzen, die vorteilhaft zur Infiltration eingesetzt werden können, sind Phenolharze, Furanharze, Benzoxazinharze, Bismaleinimidharze, Zucker (vorliegend als mindestens einen Zucker enthaltende Lösung), Pech und deren Gemische. Diese carbonisierbaren Substanzen können auch Füllstoffen auf Basis van Kohlenstoff und SiC enthalten, um die Feststoffausbeute zu erhöhen.

Eine Verdichtung könnte in entsprechender Weise auch mit sich durch Pyrolyse in Si/SiC zersetzenden siliziumhaltigen Substanzen erfolgen.

Die für die Verdichtung verwendeten Substanzen können auch Füllstoffe auf Basis van Kohlenstoff und SiC enthalten, um die Feststoffausbeute zu erhöhen.

Die Verdichtung durch CVI kann z.B. so erfolgen, wie in WO 2019/063831 A2 beschrieben.

Durch die Verdichtung lässt sich eine für die Infiltratian in Schritt d) gewünschte Parosität einstellen. Wenn die Verdichtung nach dem Anbringen des faserhaltigen Verstärkungselements am Körper erfolgt, wird dadurch eine durchgehende Phase erzeugt, die alle Teile verbindet. Im faserhaltigen Verstärkungselement stellt die Verdichtung darüber hinaus eine Kohlenstoffschicht auf den Fasern sicher. Bei der anschließenden Infiltration wird Siliziumcarbid bevorzugt mit dem Kohlenstoff dieser Kohlenstoffschicht gebildet. Die verstärkenden Fasern, z.B. Carbonfasern, werden durch die Infiltration dann weniger stark angegriffen. Dadurch steigt die mechanische Belastbarkeit des erfindungsgemäß bereitgestellten keramischen Faserverbundbauteils. Die Verdichtung kann wiederholt werden.

Vor Beginn der Verdichtung erfolgt eine Carbonisierung von im oder am Verstärkungselement und/oder Körper gegebenenfalls vorhandener carbonisierbarer Substanz, wie z.B. Harzen.

Erfindungsgemäß erfolgt in Schritt d)ein Verbinden von Körper und Verstärkungselement durch Infiltration mit Silizium oder mit einer siliziumhaltigen Verbindung. Dieser Schritt wird hierin auch als "Silizierung" bezeichnet. Wird in Schritt d) eine Infiltration mit einer siliziumhaltigen Verbindung durchgeführt, muss nach ein Schritt e) erfolgen, um eine vollständige "Silizierung" im Sinne der vorliegenden Erfindung zu bewirken.

Die Infiltration kann durch ein flüssiges oder gasförmiges Medium erfolgen.

Es kann z.B. flüssiges Silizium oder eine mindestens eine siliziumhaltige Verbindung umfassende Flüssigkeit infiltriert werden.

Das flüssige Silizium muss nicht rein sein, da sich die gewünschte Verbindung von Körper und Verstärkungselement auch dann gut ausbildet, wenn das flüssige Silizium größere Mengen anderer Substanzen enthält. Das Silizium kann insbesondere Metalle enthalten, wie z.B. Eisen, Zirkon, Titan oder Aluminium. Der Si-Massenanteil der zur Infiltration van flüssigem Silizium verwendeten Schmelze beträgt vorzugsweise mehr als 50 Gew.-%. Es kann sich aber auch um Reinsilizium handeln mit einem Si-Massenanteil von> 95 Gew.-%, vorzugsweise > 97 Gew.-%, besonders bevorzugt > 99 Gew.- %. Wegen der hohen Schmelztemperatur van Silizium kommt es im Allgemeinen schon während der Infiltration zur Bildung von Siliziumcarbid, wobei der im Siliziumcarbid enthaltene Kohlenstoff aus dem Verstärkungselement und dem Körper stammt. Man spricht deshalb auch von einer Reaktivinfiltration. Hierbei wird eine durchgehende Sihaltige Verbindungsphase vom Körper, gegebenenfalls über die Fügemittelzone, bis in das Verstärkungselement hinein gebildet.

Die siliziumhaltigen Verbindungen in der Flüssigkeit sind vorzugsweise siliziumorganische Verbindungen, insbesondere Polymere, z.B. Polysiloxane, Polycarbosilane, Polysilane, Polysilazane. Wenn eine siliziumhaltige Verbindungen umfassende Flüssigkeit infiltriert wird, umfasst Schritt d) außerdem eine der Infiltration nachgelagerte Temperaturbehandlung unter Bedingungen, bei denen sich Siliziumcarbid bildet, z.B. bei einer Temperatur im Bereich von 400 bis 1200 °C, insbesondere im Bereich von 800 bis 1200 °C.

Alternativ kann ein Gas infiltriert werden, das eine verdampfbare Siliziumverbindung, vorzugsweise eine verdampfbare siliziumorganische Verbindung, besonders bevorzugt eine verdampfbare siliziumorganische Verbindung mit Si-C Bindung, wie z.B. Methylchlorsilan, enthält. Es kann z.B. Methylchlorsilan bei 1250 °C in einer H₂/N₂-Atmosphäre bei Niederdruck durch chemische Gasphaseninfiltration (CVI) infiltriert werden.

Spätestens in Schritt d) bzw. Schritt e) im Falle der siliziumhaltigen Verbindungen wird das entstehende keramische Faserverbundbauteil in der Regel sehr hohen Temperaturen ausgesetzt, so dass die schon weiter oben erwähnten Spannungsgradienten und mechanischen Spannungen auftreten. Diese entstehen, da die thermisch bedingte Ausdehnung für Körper und Verstärkungselement unterschiedlich sind. Die thermisch bedingte Ausdehnung wird mit einem irreversiblen Schrumpfen überlagert. Das Schrumpfen ist auf die Pyrolyse von Bestandteilen von Körper und Verstärkungselement zurückzuführen. Stärkere Spannungsgradienten und mechanischen Spannungen können immer dann auftreten, wenn thermischer Ausdehnungskoeffizient und der Schrumpf der Teile (Körper und Verstärkungselement) sich stark unterscheiden.

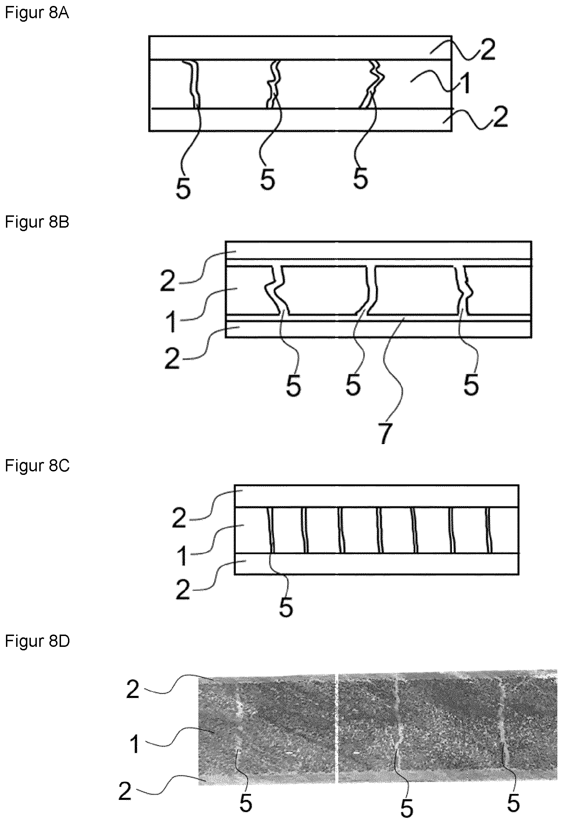

Schrumpft der Körper beim Erhitzen erheblich stärker als das Verstärkungselement, bilden sich im Körper Segmentierrisse. Dies rührt daher, dass der Körper bei thermisch bedingten Zugbelastungen stärker zur Rissbildung neigt, als das faserhaltige Verstärkungselement. Es zeigte sich, dass die Segmentierrisse zufälliger Gestalt sind, aber in recht regelmäßigen Abstanden auftreten, wie in Figuren 8 A, B und D gut zu erkennen ist. Die Segmentierrisse begünstigen die Silizierung und werden bei der Silizierung zugleich verfüllt. Sie stellen daher keine wesentliche mechanische Schwachstelle, sondern lediglich Wärmebrücken dar. Diese lassen sich gezielt zur Abfuhr von Wärme nutzen, was bei vielen Verwendungen vorteilhaft ist.

Es wird vermutet, dass das durchweg besonders homogene Gefüge der in Schritt a) bereitgestellten, additiv gefertigten Körper dafür sorgt, dass sich Segmentierrisse in so regelmäßigen Abstanden bilden. Die Tatsache, dass in Schritt a) von dem additiv gefertigten Körper ausgegangen wird, trägt also zur Homogenität des Wärmeflusses über regelmäßig beabstandete Wärmebrücken des erfindungsgemäß bereitgestellten Bauteils bei.

Da die Rissbildung abhängig vom thermischen Schrumpf des Körpers ist, sind Anzahl, Abstand und Dimension der Risse davon abhängig, wie sehr der Körper im Verbund schrumpft. Dies wird maßgeblich davon beeinflusst, welche thermischen Prozesse (insbesondere welche Prozesstemperatur) der Körper oder das im Körper verarbeitete Pulver bereits vor dem Fügen erfahren hat. Ist der in Schritt a) bereitgestellte Körper graphitbasiert, z.B. hergestellt aus Graphitpulver, dann minimiert sich der Schrumpf des Körpers und somit die mechanischen Spannungen. Alternativ kann der Körper vor dem Fügen bei hoher Temperatur vorbehandelt werden oder bei der additiven Fertigung ein hochtemperaturbehandeltes Pulver verwendet werden.

Ein mit faserverstärktem Element verstärkter Körper aus einem bei z.B. lediglich 700°C vorgetemperten Körper schrumpft viel stärker, als ein Körper, der vor dem Fügen z.B. schon bei 1400°C getempert wurde.

Darüber hinaus kann die Lage der Segmentierrisse gesteuert werden, indem der in Schritt a) eingesetzte Körper an bestimmten Stellen schwacher ausgebildet ist (sogenannte Schwachstellen), so dass sich Segmentierrisse nur an diesen Stellen oder weit überwiegend nur an diesen Stellen bilden. Solche Stellen können Vertiefungen an der Oberflache des Körpers sein oder aber gezielt bindemittelfreie Bereiche im Inneren des additiv gefertigten Körpers. Figure 8C zeigt schematisch einen Schnitt durch ein erfindungsgemäß bereitgestelltes Bauteil, bei dem die (durch Silizierung verfüllten) Segmentierrisse nur an den Stellen liegen, an denen der in Schritt a) bereitgestellt, durch additive Fertigung erhältliche Körper, schwacher ausgebildet war.

Durch das Einbringen einer Vielzahl solcher Schwachstellen bilden sich eine Vielzahl von Rissen aus, was zu einer geringeren Rissbreite im Vergleich zu der Rissbreite zufällig gebildeter Risse führt. Zudem können Risse gezielt an den Stellen erzielt werden, an denen Wärmeleitkanale vorteilhaft sind. Wenn die Risse bereits bei thermischen Prozessen vor Schritt d) entstehen, so kann das Rissvolumen durch Infiltration einer kohlenstoffhaltigen Verbindung und Pyrolyse mit Kohlenstoff verfüllt werden. Dies bewirkt, dass sich bei der Infiltration mit Silizium in Schritt d) im Rissvolumen SiC ausbildet, so dass die Risse im faserverstärkten Bauteil mit Si/SiC/C gefüllt sind.

In Schritt b) des erfindungsgemäßen Verfahrens werden der Körper und/oder das Verstärkungselement mit Silizium oder mit einer siliziumhaltigen Verbindung infiltriert.

Diese Infiltration kann unter denselben
Bedingungen durchgeführt werden, die oben für Schritt d) angegeben sind.

Die oben beschriebene, optionale Verdichtung van Körper und/oder Verstärkungselement erfolgt im Allgemeinen, bevor der Körper und/oder das Verstärkungselement (erstmalig) mit Silizium oder mit einer siliziumhaltigen Verbindung infiltriert werden.

Die Aufgabe wird ebenfalls gelöst durch ein nach dem erfindungsgemäßen Verfahren erhältliches keramisches Faserverbundbauteil; z.B. durch ein keramisches Faserverbundbauteil aufweisend einen Körper und ein faserhaltiges Verstärkungselement, wobei der Körper und das Verstärkungselement mit Si und/oder SiC-Keramik verbunden sind, hergestellt nach einem erfindungsgemäßen Verfahren.

Das nach dem erfindungsgemäßen Verfahren bereitgestelltes keramisches Faserverbundbauteil aufweist einen Körper, der von Fasern frei ist oder keine Fasern mit einer mittleren Lange von mehr als 0,5 mm umfasst und ein faserhaltiges Verstärkungselement, das Fasern mit einer mittleren Lange von mehr als 1 mm umfasst, wobei der Körper und das Verstärkungselement mit Si und/oder SiC-Keramik verbunden sind.

In erfindungsgemäß bereitgestellten Bauteilen kann das Verhältnis vom Volumen des Verstärkungselements oder der Verstärkungselemente zum gesamten Volumen des Bauteils in breiten Bereichen variieren. Für bestimmte Bauteile/zu bestimmten Verwendungen können sehr kleine Verstärkungselemente ausreichen. Hingegen können bei anderen Bauteilen/für bestimmte Verwendungen sehr große Verstärkungselemente erforderlich sein. Im Allgemeinen beträgt das Volumenverhältnis von Verstärkungselement(en) zum gesamten Volumen des erfindungsgemäß bereitgestellten Bauteils 0,001 bis 0,80, bevorzugt 0,05 bis 0,60 besonders bevorzugt 0,01 bis 0,50.

Der Faservolumenanteil im faserhaltigen Verstärkungselement beträgt vorzugsweise mindestens 20 %, insbesondere mindestens 50 %. Dies lasst sich im Schliffbild optisch bestimmen. Dazu schneidet man ein erfindungsgemäß bereitgestelltes Bauteil einschließlich Verstärkungselement durch, schleift die beim Durchschneiden erhaltenen Schnittoberflächen ab und bestimmt visuell (z.B. mit einem Mikroskop), welchen Anteil die von Fasern eingenommenen Bereiche der Verstärkungselement-Schnittoberflächen an den gesamten Verstärkungselement-Schnittoberflächen einnehmen. Sind die Fasern innerhalb des Verstärkungselements nicht vollkommen homogen verteilt, so wird das Bauteil mehrfach durchschnitten und es werden sämtliche Verstärkungselement-Schnittoberflächen in die Bestimmung des Faservolumenanteils mit einbezogen. Es wurde schon oben im Zusammenhang mit dem erfindungsgemäßen Verfahren beschrieben, dass die Herstellung des keramischen Faserverbundbauteils unter Verwendung van formbaren Verstärkungselementen, wie z.B. Harz-Faser-Masse, erfolgen kann. Insbesondere solche Massen führen häufig zu erfindungsgemäß bereitgestellten Bauteilen mit ausgedehnten faserfreien, auf Harz zurückgehenden Verstärkungselementbereichen und mit dementsprechend geringem Faservolumenanteil.

Vorzugsweise ist der Körper von Fasern frei oder umfasst Fasern die die Dimensionen der Partikel aus denen der Körper gebildet ist, nicht überschreiten, z.B. umfasst er keine Fasern mit einer Lange von mehr als 0,5 mm, insbesondere keine Fasern mit einer Länge von mehr als 0,4 mm. Durch die Obergrenze bei der Länge der Fasern wird gewährleistet, dass der Körper in besonders einfacher Weise durch additive Fertigung, z.B. Binder Jetting, erzeugt werden kann. Fasern oberhalb einer gewissen Länge sind in additiven Fertigungsverfahren schwer mitzuverarbeiten.

Das faserhaltige Verstärkungselement ist vorzugsweise ein carbonfaserhaltiges oder siliziumcarbidfaserhaltiges Verstärkungselement, besonders bevorzugt ein carbonfaserhaltiges Verstärkungselement. Dies bewirkt eine hohe Schlagzähigkeit, pseudoduktiles Bruchverhalten, eine hohe Härte, eine hohe Verschleissbeständigkeit, gute Reibeigenschaften, hohe Festigkeit, gute Temperatur- und Korrosionsstabilität und zugleich ein inertes Verhalten gegenüber vielen hochkorrosiven Chemikalien, wie Salz-, Schwefel- und Salpetersäure. Letztlich führt dies zu einer sehr vielseitigen Verwendbarkeit erfindungsgemäß bereitgestellter Bauteile, wobei die Lebensdauer konventioneller
Bauteile teils deutlich überschritten wird. Eine Reihe mögliche Verwendungen sind unten angegeben.

Vorzugsweise umfasst das faserhaltige Verstärkungselement ein Gewebe, ein Spiralgewebe, ein multiaxiales Gelege, ein unidirektionales Gelege, Kurzschnittfasern, Endlosfasern, ein Vlies, einen Filz, ein Papier, ein Geflecht, ein Gestrick, ein Gestick und/oder ein Fasergitter. Gestricke sind elastisch und dadurch gut drapierbar. Fasergitter bieten Zwischenräume für gute Wärmeleitung. Der Körper kann dann Bereiche aufweisen, die sich durch das Fasergitter hindurch erstrecken, so dass zwischen der Vorder- und Rückseite des Fasergitters Wärmebrücken bestehen. Im Allgemeinen ist in erfindungsgemäß bereitgestellten Bauteilen die Wärmeleitfähigkeit des Körpers höher, als die Wärmeleitfähigkeit des Fasergitters. Geflechte und Gestricke sind bevorzugt Schläuche und lassen sich somit gut zur Außenverstärkung des Körpers verwenden. Endlosfaser umfassende Verstärkungselemente werden z.B. hergestellt indem ein Towpreg um den Körper gewickelt wird.

Erfindungsgemäß bevorzugt weist das keramisches Faserverbundbauteil ein faserhaltiges Verstärkungselement auf, das Fasern mit einer mittleren Länge von mehr als 1 mm umfasst. Vorgenannte faserhaltige Verstärkungselemente wie z.B. Gelege, Vliese, Filze, Papiere, Geflechte, Gestricke, Gestricke oder Fasergitter enthalten regelmäßig Fasern mit einer mittleren Länge von weit mehr als 1 mm.

Das keramische Faserverbundbauteil kann ein faserhaltiges Verstärkungselement aufweisen, das Fasern mit einer mittleren Länge von mehr als 0,5 cm, z.B. von mehr als 1 cm, insbesondere von mehr als 2 cm umfasst. Mit kürzeren Fasern lassen sich Gelege, Geflechte, Gestricke, Gestricke oder Fasergitter nur mit erhöhtem Aufwand verwirklichen. Gerade bei Kurzschnittfasern, Vliesen, Filzen oder Papieren sind jedoch auch sehr kurze Fasern möglich.

Ein bevorzugtes keramisches Faserverbundbauteil enthält 20 - 90 Gew.-% SiC und 5 - 45 Gew.-% freies Silizium. Zusätzlich können 0 - 60 Gew. %, z.B. 5 - 60 Gew.-% freier Kohlenstoff enthalten sein. Dies bewirkt, dass das Bauteil bis 1400°C hochtemperaturstabil ist, darüber hinaus eine hohe chemische Stabilität (Korrosionsbeständigkeit) und Verschleißstabilität, gute Reibeigenschaften, Zähigkeit und hohe Wärmeleitung hat. Die Massenanteile an Si und SiC lassen sich bestimmen nach DIN EN ISO 21068-2.

Hinsichtlich der Form der verbundenen Oberflächenbereiche von Verstärkungselement und Körper bestehen keine Einschränkungen. Der Körper kann formschlüssig mit dem Verstärkungselement verbunden sein. Dies bewirkt eine zusätzliche Steigerung der Stabilität der Verbindung zwischen den Teilen des Faserverbundbauteils, also zwischen Verstärkungselement und Körper. Mindestens eines der Teile (z.B. der Körper) kann eine Hinterschneidung aufweisen, in die der andere Teil (z.B. das Verstärkungselement) formschlüssig eingreift, z.B. in Form einer Schwalbenschwanzverbindung. Dies ist im Zusammenhang mit der Erfindung sehr effektiv, da die additive Fertigung für die Herstellung van Hinterschneidungen besonders gut geeignet ist. Der in Schritt a) bereitgestellte Körper kann also eine Hinterschneidung aufweisen. Ein formbares Verstärkungselement kann beim Anbringen z.B. durch Pressen in Formschluss mit der Hinterschneidung gebracht werden und dann formschlüssig ausgehartet werden.

Der Körper kann eine Ausnehmung aufweisen, in die das (gesamte) faserhaltige Verstärkungselement aufgenommen ist oder das faserhaltige Verstärkungselement weist eine Ausnehmung auf, in welches der Körper aufgenommen ist. Eine weitere Alternative ist, dass der Körper und das faserhaltige Verstärkungselement formschlüssig miteinander verbunden sind. Das Verstärkungselement stört die Außengeometrie des Körpers bzw. der Körper stört die Außengeometrie des Körpers dann nicht. Die Oberfläche bleibt gleich, was z.B. bei einem Pumpenimpeller von großem Vorteil sein kann.

Mittels additiver Fertigung kann der Körper in unterschiedlichsten Formen bereitgestellt werden, so dass jede erdenkliche Faserverbundbauteilgeometrie möglich ist. Ausnehmungen für faserhaltige Verstärkungselemente und/oder Hinterschneidungen können dabei an jeder beliebigen Stelle vorgesehen werden. Je nach Bauteil und dessen bestimmungsgemäßer Verwendung ergeben sich besonders hohe mechanische Belastungen immer an ganz bestimmten Stellen, an denen die faserhaltigen Verstärkungselemente gezielt angeordnet werden können. Dort wo thermische Belastungen erwartet werden, kann gezielt nur Körper vorgesehen werden, ohne Faserverstärkung, da der Körper des erfindungsgemäß bereitgestellten Faserverbundbauteils im Allgemeinen eine höhere Wärmeleitfähigkeit hat, als das faserhaltige Verstärkungselement. So erhalt man ein Bauteil, das den zu erwartenden Belastungen (mechanisch und thermisch) in jedem Bauteilbereich gerecht wird und zugleich besonders günstig hergestellt werden kann.

Der Körper kann Graphitpartikel umfassen. Im Vergleich zu amorphem Kohlenstoff bewirkt dies eine weitere Steigerung der Hochtemperaturstabilität des erfindungsgemäß bereitgestellten Bauteils. Darüber hinaus steigen thermische und chemische Stabilität (Korrosionsbeständigkeit) sowie Wärmeleitung.

Die erfindungsgemäß bereitgestellten Bauteile zeigen kein spontanes Sprödbruchverhalten. Spontanes Sprödbruchverhalten zeigen typischerweise nicht faserverstärkte Keramiken.

Bevorzugte erfindungsgemäß bereitgestellte keramische Faserverbundbauteile weisen ein pseudoduktiles Bruchverhalten auf. Dies bedeutet, dass sich mit erfindungsgemäß bereitgestellten keramischen Faserverbundbauteilen im 3-Punkt Biegeversuch eine Spannungs- Dehnungs-Kurve bestimmen lässt, die nach einem ersten, auf die linear-elastische Verformung des Bauteils zurückgehenden Anstieg nicht abrupt beim ersten Riss auf 0 fällt. Es kommt beim ersten Riss am Bauteil nicht gleich zu einem abrupten Versagen.

Hingegen würde z.B. eine Keramik ohne Faserverstärkung am Ende der linearelastischen Verformung brechen, wobei sich im 3-Punkt Biegeversuch dann eine Spannungs-Dehnungs-Kurve ergibt, die nach einem ersten, auf die linear-elastische Verformung des Bauteils zurückgehenden Anstieg, abrupt auf 0 fällt.

Ein solches abruptes Abfallen der Spannungs-Dehnungs-Kurve auf 0 erfolgt mit erfindungsgemäß bereitgestellten Bauteilen nicht, da das mit dem Körper verbundene faserhaltige Verstärkungselement ein plötzliches Materialversagen verhindert. Auch nach einem initialen Riss im Körper des erfindungsgemäß bereitgestellten Bauteils ist wegen des Verstärkungselements für eine weitere Verformung ein weiterer Kraftaufwand erforderlich. Das pseudoduktile Bruchverhalten verleiht dem keramischen Faserverbundbauteil eine ausgeprägte Schadenstoleranz.

Der 3-Punkt Biegeversuch kann z.B. durchgeführt werden in Anlehnung an ISO 178:2013 mit Auflagerradius: 3mm, Stempelradius: 3mm, Stützweite: 80 mm, mit einer Prüfgeschwindigkeit von 2 mm/min.

Manche keramischen Faserverbundbauteile weisen mindestens einen Segmentierriss auf, der sich von einer dem Verstärkungselement zugewandten Oberfläche des Körpers in den Körper hinein erstreckt, wobei der Massenanteil an Silizium im Segmentierriss höher ist, als in den an den Segmentierriss angrenzenden Bereichen des Körpers. Dies lässt sich durch energiedispersive Röntgenspektroskopie (EDX) bestimmen.

Das keramische Faserverbundbauteil kann eine Mehrzahl beabstandeter gefüllter Segmentierrisse aufweisen, wobei das Volumen der Segmentierrisse insgesamt höchstens 10 %, z.B. höchstens 5 %, des gesamten Volumens des Körpers einnimmt. Das gesamte Volumen des Körpers ist die Summe des Volumens des Körpers und des Volumens der Segmentierrisse.

Die erfindungsgemäß bereitgestellten keramischen Faserverbundbauteile können als Bremsscheibe für Flugzeuge, Züge, Aufzüge, Seilbahnen, Motorräder, Personenkraftwagen (PKW), Busse, Lastkraftwagen (LKW), Quads, Rennsportfahrzeuge, für industrielle Anwendungen, z.B. für Kräne oder für Papiermaschinen, als Bremsbelag, als Verschleißschutzauskleidung, als Kupplungsscheibe, als Schleifscheibenträger, als Kühlkörper, als Hochtemperatur-gehäuse mit Kühlfinnen, als Wärmetauscher für hohe Temperaturen oder chemische Apparate, als Pumpenimpeller, als Turbinenbauteil, als Brennerdüse, als Sprühdüse, als Chargierhilfsmittel, als Prozesshilfsmittel (z.B. als Prozesshilfsmittel für Hochtemperaturprozesse, wie z.B. Härteprozess, Lötprozess, Beschichtungsprozess, Brennprozess, Umformprozess), als Gieß- , Press-, Tiefzieh- und Laminierfarmen, als ballistischer Schutz, als Satellitenspiegelträger, oder als Messmittel verwendet werden.

Hervorzuheben ist, dass dabei keine oder nur sehr geringe Mehrkosten für komplexe Geometrien entstehen. Ein wesentlicher Vorteil des erfindungsgemäßen Verfahrens ist, dass die komplexe Struktur gedruckt werden kann. Dadurch entsteht viel weniger Verschnitt, als bei konventioneller Fertigung von z.B. Lüftungsstrukturen, Aussparungen, Kanälen. Durch die Möglichkeit des zielgerichteten Einsatzes von Fasern an den mechanisch am stärksten belasteten Stellen gelingt eine besonders effiziente Fertigung, weil Fasern teurer sind als die für die additive Fertigung benötigen Ausgangsstoffe. Eine weitere Effizienzsteigerung entsteht durch die Endkonturnähe der additiven Fertigung. Dies verringert den Nachbearbeitungsaufwand und insbesondere den Einsatz von diamantbeschichteten Schleifmitteln. Außerdem ist wegen der additiven Fertigung meist kein Formenbau zur Herstellung komplexer Geometrien nötig.

Durch die Faserverstärkung kann das reine nicht faserverstärkte Sprödbruchverhalten des keramischen Körpers weitestgehend verhindert werden. Dies ist insbesondere bei rotierenden Bauteilen wichtig oder auch für den ballistischen Schutz wo durch gezielte Verstärkung eine Multihitfähigkeit hergestellt werden kann.

Bremsscheiben jeglicher Art sind Sicherheitsbauteile. Daher gibt es heute keramische Bremsscheiben ausschließlich faserverstärkt, um sicherzugehen, dass kein spontanes Sprödbruchversagen auftreten kann. Die Fertigung der faserverstärkten Bremsscheiben ist dabei sehr aufwendig und in der Designfreiheit sehr begrenzt. Durch die Kombination von 3D gedruckten Kühlstrukturen mit faserverstärkte Verstärkungselementen ist man in der Lage kostengünstige Bremsscheiben zu fertigen, die sowohl der mechanisch- und sicherheitstechnischen Anforderungen ( Verstärkungselement) erfüllen als auch die thermischen bzw. thermomechanischen Anforderungen ( 3D gedruckter Körper) erfüllen.

Keramische Brennerdüsen, Sprühdüsen, Wärmetauscher, chemische Apparate, Turbinenbauteile oder Hochtemperatur-Gehäuse erfahren häufig in ihrem Einsatz eine Innendruckbeaufschlagung. Sind die Bauteile rein keramisch, d.h. ohne Faserverstärkung, ausgeführt, kann es zu ungewolltem spontanem katastrophalem Versagen führen, welches z.B. ein kontrolliertes Abfahren einer Gesamtanlage nicht mehr ermöglicht und Sekundärschäden nach sich ziehen kann. Durch den hybriden Aufbau - 3D gedruckter Formkörper mit faserverstärkten Verstärkungselement - kann ein katastrophales Versagen und die potentiell damit verbundenen Sekundärschäden weitestgehend ausgeschlossen werden.

Kupplungsscheiben, Schleifscheibenträger, Turbinenbauteile, aber auch Pumpenimpeller sind aufgrund der hohen Drehzahlen ebenso kritische Bauteile. Das Risiko eines spontanen Versagens wird daher ebenso durch den hybriden Aufbau (3D gedruckter Körper plus Verstärkungselement) wirkungsvoll minimiert.

Verschleißschutzauskleidung als auch ballistische Schutzstrukturen aus rein monolithischer Keramik laufen Gefahr, bei schlagartiger Beanspruchung des spröden Total-Versagens, welches die Bauteilintegrität komplett zerstören kann. Dies kann im Falle der Auskleidung zu einem Abfall der Auskleidung in den Reaktor kommen. Im Falle der Ballistik kann die Multihitfähigkeit des Bauteils nicht mehr gewährleistet werden. Die Anbringung des Verstärkungselements an den 3D gedruckten Körper kann dabei ähnlich eines Sicherheitsglases wirken, so dass ein vollständiges Versagen des Bauteils weitgehend ausgeschlossen werden kann.

Chargierhilfsmittel und Prozesshilfmittel gewinnen ebenso durch den hybriden Aufbau. Mit Hilfe des 3D Drucks können z.B. komplizierte formstabile Ablageformen (z.B. als Negativform des späteren zu härten oder sinternden Bauteils) mit mechanisch schlagfesten Trägerplatte kombiniert werden, wodurch die beiden Elemente mechanische Robustheit bei gleichzeitig hohen Maß an kosteneffizienter Geometriefreiheit erzielt werden.

Im Falle des Satellitenspiegelträgers können schadenstolerante faserverstärkte Basisstrukturen mit komplexen hoch steifen 3D gedruckten Rippenstrukturen kombiniert werden. Ähnliches kann für Messmittel sowie Kühlkörper und auch jeglicher Art von Formen übertragen werden.

Das erfindungsgemäße Verfahren kann auch zur Reparatur van keramischen Bauteilen verwendet werden. Hierfür kann mittels des 3D- Drucks ein passgenaues Inlay hergestellt und in ein beschädigtes faserverstärktes Bauteil gefügt werden. Das Fügen kann mittels einer Fügepaste erfolgen, gefolgt von einem Temperaturschritt, um eine durchgehende Siliziummatrix zu erzeugen. Das erfindungsgemäße Verfahren kann auch zur Reparatur van keramischen Ballistikplatten eingesetzt werden. Hierbei können die durch Beschuss beschädigten Teile der Ballistik- platten durch passgenaue Inlays ersetzt werden, so dass diese Ballistikplatten weiterverwendet werden können.

Die Erfindung wird durch die nachfolgenden Figuren und Ausführungsbeispiele illustriert, ohne auf diese beschränkt zu sein.

### Figuren

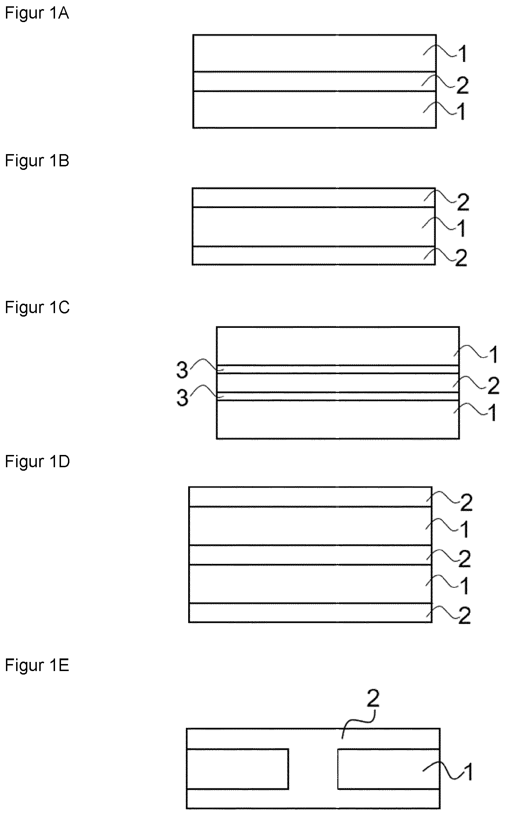

- Figur 1A: zeigt ein Sandwichbauteil mit flächigem Verstärkungselement zwischen zwei flächigen, 3D gedruckten Körpern
- Figur 1B: zeigt ein Sandwichbauteil mit flächigem, 3D gedrucktem Körper zwischen zwei flächigen Verstärkungselementen
- Figur 1e: zeigt ein Sandwichbauteil mit flächigem Verstärkungselement zwischen zwei flächigen, mit Paste angebrachten 3D gedruckten Körpern
- Figur 1D: zeigt ein Mehrlagenbauteil in dem flächige, 3D gedruckte Körper und flächige Verstärkungselemente abwechselnd übereinander angeordnet sind,
- Figur 1E: zeigt ein Sandwichbauteil, bei dem der flächige 3D gedruckte Körper eine durchgängige Ausnehmung aufweist, durch welche die beiden flächigen Verstärkungselemente miteinander verbunden sind.
- Figur 2A: zeigt ein Bauteil, bei dem der Körper mehrere Ausnehmungen zur Aufnahme je eines Verstärkungselements aufweist
- Figur 2B: zeigt einen Schnitt durch das Bauteil der Figur 2A entlang der gestrichelten Linie
- Figur 2C: zeigt ein Bauteil, bei dem der Körper zu einem Gitter verbundene Ausnehmungen zur Aufnahme eines gitterförmigen Verstärkungselements aufweist
- Figur 2D: zeigt einen Schnitt durch das Bauteil der Figur 2C entlang der gestrichelten Linie
- Figur 2E: zeigt einen Schnitt durch einen Mehrlagenbauteil aus drei Lagen von Bauteilen aus Figur 2A oder 2B
- Figur 2F: zeigt ein Bauteil, bei dem der Körper eine Vielzahl zylindrischer Ausnehmungen aufweist, zur Aufnahme je eines Verstärkungselements
- Figur 2G: zeigt einen Schnitt durch das Bauteil der Figur 2F entlang der gestrichelten Linie
- Figur 3A: zeigt ein Bauteil mit scheibenförmigen Körper, der von einem ringförmigen Verstärkungselement umgeben ist
- Figur 3B: zeigt einen Schnitt durch das Bauteil der Figur 3A entlang der gestrichelten Linie
- Figur 3C: zeigt ein Bauteil mit scheibenförmigem Körper, wobei ein ringförmiges Verstärkungselement in eine umlaufende Nut aufgenommen ist
- Figur 3D: zeigt einen Schnitt durch das Bauteil der Figur 3C entlang der gestrichelten Linie
- Figur 4A: zeigt eine Aufsicht auf ein Bauteil mit einem nach oben offenem Körper, der verfüllt ist mit einem aus einer faserhaltigen Schüttung erhältlichen Verstärkungselement
- Figur 4B: zeigt einen Schnitt durch das Bauteil der Figur 4A entlang der gestrichelten Linie mit Deckel
- Figuren 5A, B und C: zeigen Schnitte von Körpern, deren komplex geformte Oberfläche mit einem Verstärkungselement überzogen sind
- Figuren 6A, B: zeigen Bauteile, in denen schwalbenschwanzförmige Verstärkungselemente in mindestens einer Nut aufgenommen sind.
- Figuren 7A, B: zeigen Bauteile, bei denen der 3D gedruckte Körper eine Kanalstruktur enthält, wie sie z.B. zur Kühlung verwendet werden kann.
- Figuren 8A, B, C und D: zeigen Schnitte van Bauteilen, bei denen der 3D gedruckte Körper siliziumgefüllte Segmentierrisse aufweist.
- Figuren 9 A, B: zeigen ein Bauteil, bei dem komplexe 3D gedruckte Körper in eine faserverstärkte Grundplatte gefügt sind. Figur 9A zeigt die Aufsicht, Figur 9B zeigt einen Schnitt durch das Bauteil.
- Figur 10: zeigt eine Spannungs-Dehnungs-Kurve aus einem 3-Punkt Biegeversuch.
- Figur 11: zeigt einen Schnitt durch einen Verbund aus einem Verstärkungselement umfassend kurzfaserige Carbonfasern mit einem 3D-gedruckten positioniertem Kühlelement

In Figur 1A bis E sind erfindungsgemäß bereitgestellte Bauteile in Form von Sandwichstrukturen aus flächigen Verstärkungselementen **2** und flächigen, 3D gedruckten Körpern 1 gezeigt. Solche Sandwichstrukturen werden durch Verpressen hergestellt und anschließend mittels Carbonisierung und Silizierung zu einem erfindungsgemäß bereitgestellten Bauteil weiterprozessiert. Die Art des jeweils zu bevorzugenden Verstärkungselements **2** hängt dabei van der Geometrie des Bauteils (Verstärkungselement basierend auf Bahnware bei rechteckigen Strukturen oder Spiralgewebe bei runden Strukturen) sowie dem späteren Lastverlauf (unidirektionale, multiaxiale Gelege oder Gewebe) ab.

In den Bauteilen der Figuren 1A, B, D und E wird bei der Herstellung ein nicht ausgehärtetes, harzhaltiges und damit formbares Verstärkungselement **2** eingebracht. Als formbares Verstärkungselement kann zur Herstellung der Bauteile der Figuren 1A, B und D, E z.B. ein Prepreg verwendet werden. Dabei wirkt das im Prepreg enthaltene Harz als Fügebindemittel und sorgt für eine stoffschlüssige Verbindung von Körper **1** und Verstärkungselement **2.**

Das Bauteil der Figur 1C ist unter Verwendung von zusätzlichem Fügebindemittel hergestellt. Als Fügebindemittel wird eine Kohlenstoff- und/oder Siliziumcarbidpartikel enthaltende Paste verwendet. Das Fügebindemittel wird an den Grenzflächen zwischen Körper und Verstärkungselement aufgetragen. Ein solches Fügebindemittel kann insbesondere bei starren Verstärkungselementen nötig sein, um das Verstärkungselement **2** fest am Körper **1** anzubringen. Durch Carbonisierung und Silizierung mit flüssigem Silizium entsteht das erfindungsgemäß bereitgestellte Bauteil, wobei das Fügebindemittel in einen mit Silizium infiltrierten Fügebindemittelbereich **3** umgesetzt wird.

Es sind beliebige Lagenfolgen möglich, bei denen das Verstärkungselement **2** zwischen 3D gedruckten Körpern **1** eingebettet ist (1A, 1C) oder ein 3D gedruckter Körper **1** zwischen Verstärkungselementen **2** eingebettet ist (1B). Des Weiteren sind Multilagenstrukturen mit verschiedener Lagenabfolge möglich (1D). Solche Mehrlagenstrukturen lassen sich mit starren oder formbaren Verstärkungselementen **2** realisieren, wobei insbesondere bei der Verwendung von starren Verstärkungselementen **2** das zusätzliche Fügebindemittel aufgebracht wird, so dass eine feste Anbringung des starren, van nicht ausgehärtetem Bindemittel im Wesentlichen freien, Verstärkungselement **2** am Körper ermöglicht wird. Die außersten Lagen können wahlweise auf 3D gedruckter Körper **1** zurückgehen oder Verstärkungselemente **2** sein. Eine durchgängige Ausnehmung im 3D gedruckten Körper **1** ermöglicht die Verbindung zweier beidseitig aufgebrachter, formbarer Verstärkungselemente **2** und somit eine zusätzliche formschlüssige Fixierung der Verstärkungselemente **2** am 3D gedruckten Körper 1 (Figur 1E).

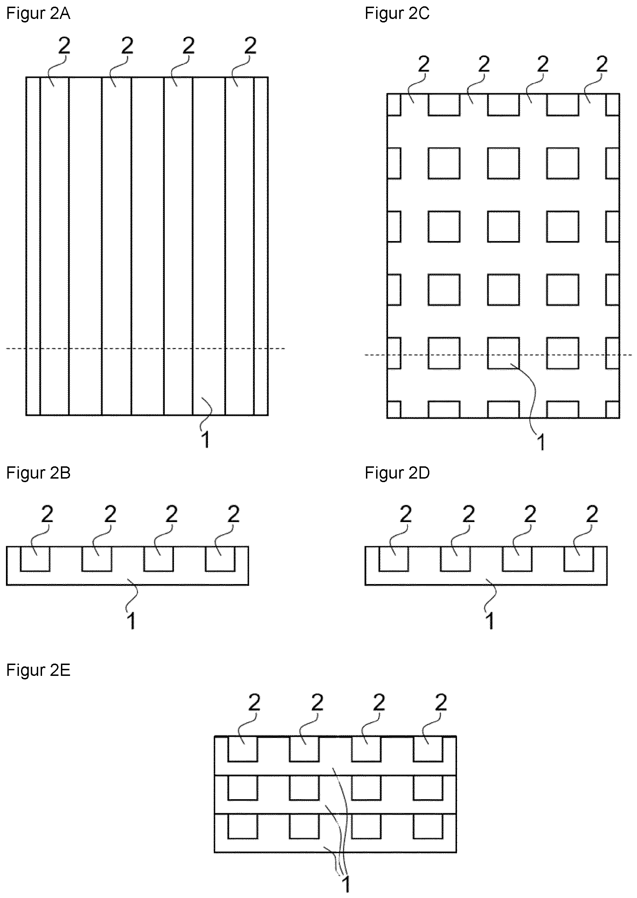

In Figur 2A bis G sind erfindungsgemäß bereitgestellte Bauteile gezeigt, bei denen der/die Körper **1** Ausnehmungen aufweisen, in die Verstärkungselemente **2** aufgenommen sind. Die Herstellung kann wahlweise mit starren oder formbaren Verstärkungselementen **2** erfolgen. Formbare, nicht ausgehärtetes Harz enthaltende Verstärkungselemente **2** (z.B. Harz-Faser-Masse) können in die Ausnehmungen hineingepresst werden. Starre Verstärkungselemente **2** werden mittels zusätzlichem Fügebindemittel in den Ausnehmungen fixiert, wobei die auf Fügebindemittel zurückgehenden Zwischenbereiche in Figur 2A bis Gnicht angedeutet sind. Anschließend wird das erfindungsgemäß bereitgestellte Bauteil durch Carbonisierung und Silizierung erhalten.

In das Bauteil der Figuren 2A, B können zum Beispiel Faserstäbe mittels Fügebindemittel eingelegt werden. In das Bauteil der Figuren 2C, D kann ein gitterförmiges Verstärkungselement eingefügt werden, z.B. ein Fasergitter.

In Figur 2E ist ein Schnitt durch einen Mehrlagenbauteil aus drei Lagen von Bauteilen aus Figur 2A oder 2C gezeigt. Zum Verbinden der drei Lagen kann ebenfalls ein Fügebindemittel verwendet werden.

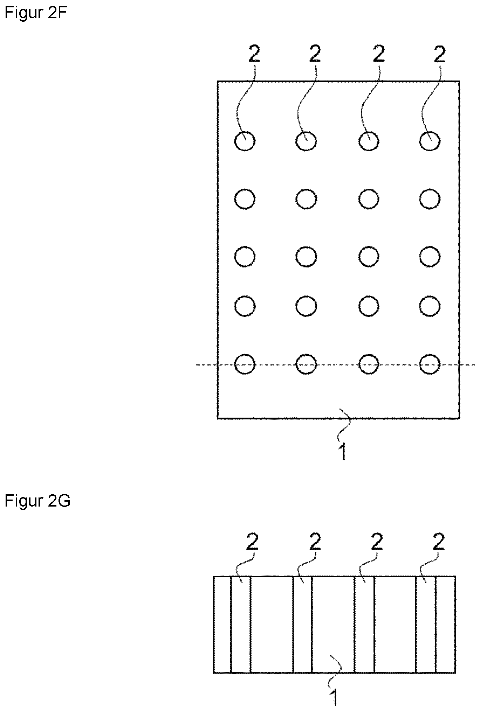

Im Bauteil der Figuren 2F, G sind die Ausnehmungen innenliegend, also ringsum von Körper **1** umgeben. Indie Ausnehmungen kann ein formbares Verstärkungselement **2** (z.B. eine Harz-Faser-Masse) eingepresst werden oder ein starres Verstärkungselement **2** eingeschoben werden. Zum Fügen mit starren Verstärkungselementen **2** können die Ausnehmungen zunächst mit Fügepaste befüllt und anschließend das Verstärkungselement **2** eingeschoben werden. Es sind Ausnehmungen mit rundem Querschnitt gezeigt, wobei genauso gut auch Ausnehmungen und Verstärkungselemente **2** mit rechteckigem oder quadratischem Querschnitt denkbar wären.

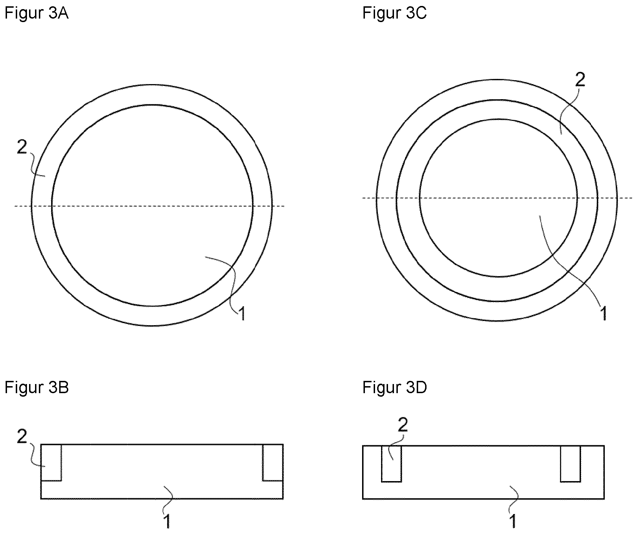

In Figuren 3A bis D sind erfindungsgemäß bereitgestellte Bauteile mit scheibenförmigen Körper **1** und ringförmigem Verstärkungselement **2** gezeigt. Der scheibenförmige Körper **1** kann vom ringförmigen Verstärkungselement **2** umgeben sein (Figuren 3A, B). Alternativ kann das Verstärkungselement **2** auch in eine umlaufende Nut des Körpers aufgenommen sein (Figuren 3C, D). Das Verstärkungselement **2** kann dabei als starrer Ring (z.B. ein Wickelrohr aus carbanfaserverstärktem Kohlenstoff) mittels Fügepaste an den scheibenförmigen Körper angebracht (Figuren 3A, B) oder in diesen eingebracht (Figuren 3C, D) sein. Alternativ kann insbesondere zur Herstellung des Bauteils der Figuren 3C, D ein formbares Verstärkungselement (z.B. eine Harz-Faser-Masse) verwendet werden, die in die Nut eingepresst wird. Zur Herstellung des Bauteils der Figuren 3A, B kann der scheibenförmige Körper alternativ mit einem harzimprägnierten Faserstrang oder einem vorimprägnierten Textil umwickelt oder ein Rundgestrick aufgezogen werden. Unabhängig von der Art der Anbringung des Verstärkungselements am Körper können erfindungsgemäß bereitgestellte Bauteile durch anschließende Carbonisierung und Silizierung erzeugt werden.

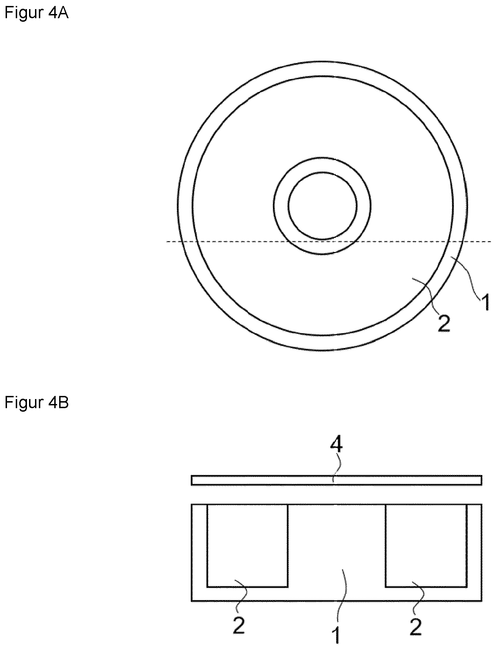

In Figuren 4A, B ist ein Bauteil gezeigt, bei dem ein nach oben offener Körper **1** mit einem aus einer faserhaltigen Schüttung erhältlichen Verstärkungselement **2** verfüllt ist. Ein solches Bauteil wird hergestellt, indem der Hohlraum eines 3D gedruckten Körpers mit Faser-Harz-Masse verfüllt wird. Im Anschluss wird die Masse mit einem Pressstempel oder durch Vakuumsackverfahrens verpresst und gegebenenfalls nochmals Faser-Harz-Masse nachgefüllt. Ist der ganze Hohlraum befüllt, wird der Körper mit einem passenden Deckel **4** verschlossen. Hierzu kann ein Fügebindemittel verwendet werden.

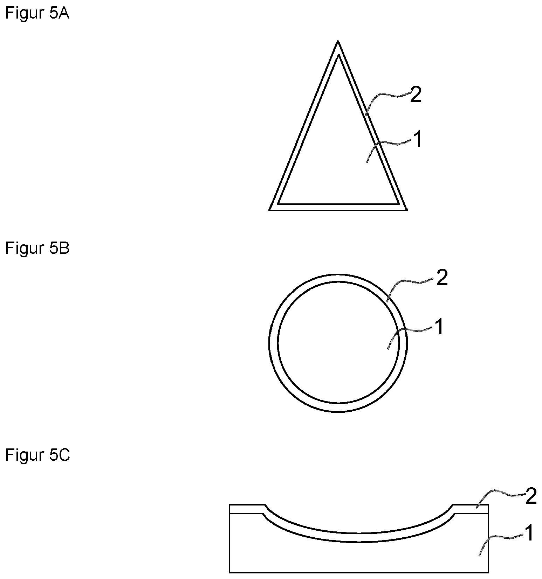

In Figuren 5A und 5B ist der Körper 1 allseitig mit Verstärkungselement **2** überzogen, in Figur 5C ist nur eine Seite des Körpers 1 mit Verstärkungselement **2** überzogen. Zum überziehen komplexer Oberflächen wird die zu verstärkende Oberfläche mit einem harzhaltigen Verstärkungselement **2** belegt (z.B. Prepreg oder Faser-Harz-Masse) und anschließend mittels Vakuumsackverfahren stoffschlüssig verbunden. Das Auflegen des Verstärkungselements **2** kann manuell, mit Hilfe eines Roboters oder mittels Faserspritzen erfolgen. Im Fall van Figur 5C kann der Stoffschluss, insbesondere bei größerer Stückzahl, auch mittels eines speziell geformten Pressstempels erzielt werden.

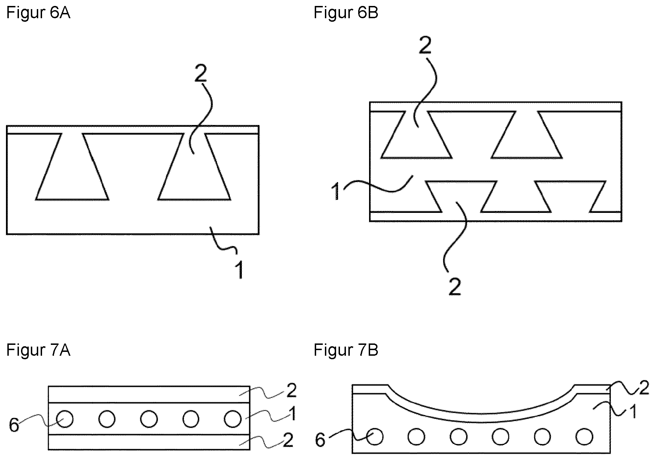

In den Bauteilen der Figuren 6A, B hat der Körper **1** Hinterschneidungen, in die das Verstärkungselement **2** formschlüssig eingreift, hier beispielhaft in Form einer Schwalbenschwanzverbindung. Es können auch andere Formen mit Hinterschneidung verwendet werden.

In Figuren 7A, B umfasst der 3D gedruckte Körper **1** Kanale **6.** Sie können zur Kühlung des Bauteils und zur Gewichtsreduktion dienen. Durch die Verwendung eines 3D Druck Verfahrens zur Herstellung des Körpers **1** lassen sich vielfältige, komplexe Strukturen darstellen. Die Einbringung von Kanälen **6** ist grundsätzlich bei allen erfindungsgemäß bereitgestellte Bauteilen möglich. Die Kanäle können ein- oder beidseitig offen sein.

In Figuren 8A, B, C und D weist der 3D gedruckte Körper siliziumgefüllte Segmentierrisse **5** auf. Solche Risse können entstehen, wenn Körper **1** und Verstärkungselement **2** stark unterschiedliche Schrumpfverhalten bei der Temperaturbehandlung oder stark unterschiedliche thermische Ausdehnungskoeffizienten aufweisen. Bei der Infiltration mit Silizium werden die entstandenen Risse mit Silizium gefüllt und tragen dann zu einer verbesserten Wärmeleitung durch das Bauteil bei. Auch die Grenzflächenbereiche **7** können mit Silizium gefüllt sein, wie in Figur 8B angedeutet. Zusammen mit den ebenfalls siliziumgefüllten Segementierrissen **5** entsteht der Eindruck einer leiterförmigen siliziumgefüllten Struktur.

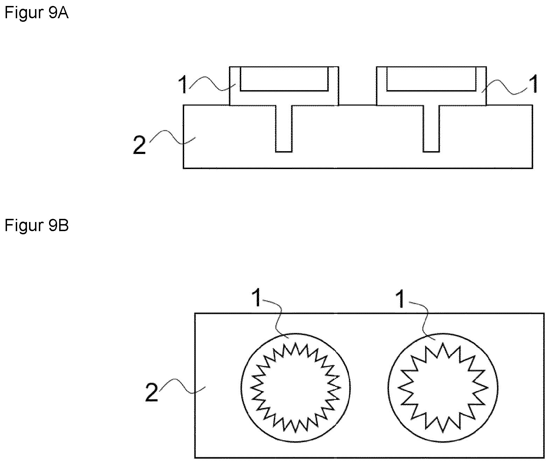

In Figuren 9A und B sind erfindungsgemäße Bauteile gezeigt, bei denen 3D gedruckte Körper **1** mit einer als faserhaltiges Verstärkungselement **2** fungierenden, faserverstärkte Grundplatte verbunden sind. Durch den 3D Druck ist eine hohe Designfreiheit möglich und es können auch komplexe Geometrien hergestellt werden. Solche Strukturen werden z.B. als Prozesshilfsmittel verwendet. Mittels 3D Druck können passgenaue Bauteilaufnahmen, z.B. für Zahnräder, wie hier angedeutet, hergestellt werden in denen die Bauteile sicher und ohne verrutschen prozessiert werden können.

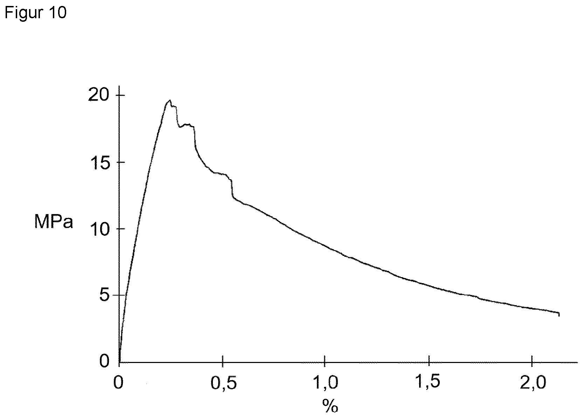

Der Graph in Figur 10 zeigt eine Spannungs-Dehnungs Kurve von einem Biegeversuch an einem Material, dessen Herstellung in Ausführungsbeispiel 4 beschrieben ist. Die Kurve zeigt klar ein pseudoduktiles Bruchverhalten und kein Spontanversagen.

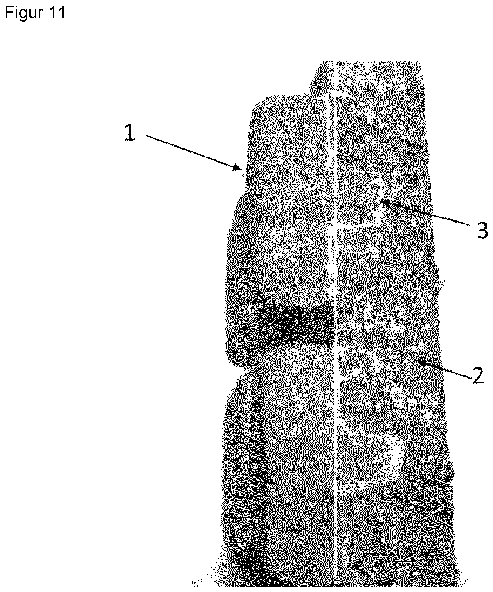

In Figur 11 ist ein Verbund aus einem Verstärkungselement umfassend kurzfasrige Carbonfasern **2** mit einem 3D-gedruckten positioniertem Kühlelement, welcher einen Körper **1** darstellt. Das kurzfaserverstärkte Element ist durch Pressen hergestellt worden. Die Positionierung des Kühlelements ist durch ein mechanisch eingebrachtes Loch im Verstärkungselement und einem entsprechend angedruckten Zapfen im Kühlelement realisiert worden.

### Bezugszeichenliste

- 1: Körper
- 2: faserhaltiges Verstärkungselement
- 3: mit Silizium infiltrierter Fügebindemittelbereich
- 4: Deckel
- 5: Segmentierrisse
- 6: Kanal
- 7: Grenzflächenbereich

### Ausführungsbeispiele

### Beispiel 1

Sandwichaufbau aus einem plattenförmigen 3D gedrucktem Körper (100x100x4mm³) und Verstärkungselement das in Form einer CFC Platte am Körper angebracht wurde. Der Körper wurde mittels Binder Jet Verfahren aus Kohlenstoffpulver und Phenolharzbinder hergestellt und vor dem Fügen, mit Phenolharz imprägniert so wie es in der WO 2017/089500 A1 beschrieben ist. Anschließend wurde bei 900 °C carbonisiert und bei 1650 °C getempert. Die CFC Platte wurde hergestellt durch Laminieren von 4 Lagen eines Phenolharzprepregs (3k Carbonfaser) welches dann carbonisiert und einmal mit Pech nachverdichtet wurde, so dass nach erneuter Carbonisierung eine Dichte von 1,2g/cm³ erzielt wurde.

Körper und Verstärkungselement wurden mittels einer Paste aus 50 Gew.-% Phenolharz und 50 Gew.-% SiC Pulver gefügt, wobei auf den beiden gegenüberliegenden Seiten des 3D gedruckten Körpers je eine CFC Platte aufgebracht wurde. Die Aushärtung erfolgte bei einer Maximaltemperatur von 220°C. Der Sandwichaufbau war dabei mit 2kg flächig beschwert.

Nach der Aushärtung wurde das Material zunächst bei 900 °C carbonisiert und im Anschluss mit flüssigem Silizium infiltriert. An den Grenzflächen zu kohlenstoffhaltigen Bereichen reagierte das flüssige Silizium zu Siliziumcarbid.

Aus der so hergestellten Platte wurden Biegeproben herausgearbeitet (100 mm x 10 mm x 8,5 mm) und mittels 3-Punkt-Biegeversuch untersucht. Die Biegekurve zeigte ein deutlich pseudoduktiles Verhalten, welches durch die Endlosfasern im Verstärkungselement erzielt wurde.

### Beispiel 2

Sandwichaufbau aus einem plattenförmigen 3D gedrucktem Körper (100x100x2mm³) und Verstärkungselement das in Form eines Phenolharzprepregs (aus isotropem Carbonfaservlies mit 450 g/m²) am Körper angebracht wurde. Der Körper wurde mittels Binder Jet Verfahren aus Kohlenstoffpulver und Phenolharzbinder hergestellt und vor dem Fügen mit Phenolharz imprägniert, bei 900°C carbonisiert und bei 1650°C getempert. Auf beide Seiten des Körpers wurde je eine Lage Prepreg aufgelegt und mit 7,5 bar bei Maximaltemperatur 170°C verpresst. Nach der Aushärtung wurde das Material zunächst bei 900°C carbonisiert und im Anschluss mit flüssigem Silizium infiltriert. An den Grenzflächen zu kohlenstoffhaltigen Bereichen reagierte das flüssige Silizium zu Siliziumcarbid.

Aus der so hergestellten Platte wurden Biegeproben herausgearbeitet (100 mm x 10 mm x 3,3 mm) und mittels 3-Punkt-Biegeversuch untersucht. Die Biegekurve zeigte dabei ein pseudoduktiles Verhalten, welches durch die Fasern im Verstärkungselement erzielt wurde.

### Beispiel 3

Sandwichaufbau aus einem plattenförmigen 3D gedrucktem Körper (100x100x10mm³) und Verstärkungselement das in Form eines Phenolharzprepregs (aus isotropem Carbonfaservlies mit 450 g/m²) am Körper angebracht wurde. Der Körper wurde mittels Binder Jet Verfahren aus Kohlenstoffpulver und Phenolharzbinder hergestellt und vor dem Fügen mit Phenolharz imprägniert. Auf beide Seiten des Körpers wurden je zwei Lagen Prepreg aufgelegt und mit 8 bar bei Maximaltemperatur 170°C verpresst. Nach der Aushärtung wurde das Material zunächst bei 900°C carbonisiert und im Anschluss mit flüssigem Silizium infiltriert. Da der Körper vor dem Fügen noch keinen thermischen Prozess erfahren hat, kam es während des Infiltrationsvorgangs zu einem signifikanten Schrumpf des Körpers. Dadurch bildeten sich Segmentierrisse aus, die in situ während des Infiltrationsvorgangs mit Silizium gefüllt wurden. Ein Foto des Querschnitts dieser Probe ist in Figur 8D zu sehen.

### Beispiel 4

Bauteil mit Verstärkungselement eingebracht in Ausnehmungen des Körpers. Mittels 3D Druck wurde aus Kohlenstoffpulver ein plattenförmiger Körper mit kanalartigen Vertiefungen auf der Ober- und Unterseite hergestellt. Anders als bei dem Bauteil aus Figuren 2A und 2B wies der plattenförmige Körper Ausnehmungen an beiden Oberflächen auf. Dieser Körper wurde mit Phenolharz imprägniert, carbonisiert und graphitiert.

Als Verstärkungseinlage wurden Carbonfasern (50k Fasern von SGL Carbon) mit Phenolharz imprägniert und in einer Pressform bei 170°C ausgehärtet. Anschließend wurden die Stäbe carbonisiert.

Die so entstandenen CFC-Stäbe wurden mit Hilfe einer Fügepaste (SiC, Phenolharz und Alkohol im Masseverhältnis 7:2:1) in die Ausnehmungen des Körpers geklebt und die ganze Oberfläche zusätzlich mit dieser Paste beschichtet. Die Probe wurde anschließend bei 170°C im Ofen ausgehärtet, im Anschluss bei 900°C carbonisiert und dann mit flüssigem Silizium infiltriert.

Aus dieser Platte wurden Biegeproben herausgearbeitet (80 mm x 9 mm x 6 mm), die genau einen Faserstrang an Ober und Unterseite aufwiesen. Diese faserverstärkten Proben zeigten in der Biegekurve ein stark pseudoduktiles Bruchverhalten; ganz im Gegensatz zum Sprödbruchverhalten der nicht verstärkten Biegeproben, die aus der gleichen Platte aus Bereichen ohne Verstärkungselement herausgearbeitet wurden. Zudem wiesen die faserverstärkten Proben einen starken fiber pull out auf, was ebenfalls ein deutliches Zeichen für eine erhöhte Duktilität ist. Eine exemplarische Biegekurve einer solchen faserverstärkten Probe ist in Figur 10 dargestellt.

### 3-Punkt Biegeversuch

Der 3-Punkt Biegeversuch wurde durchgeführt in Anlehnung an ISO 178:2013 mit Auflagerradius: 3mm, Stempelradius: 3mm, Stützweite: 80 mm, mit einer Prüfgeschwindigkeit von 2 mm/min.

### Beispiel 5

Mittels 3D Druck wurde eine ringförmige Struktur aus SiC Pulver hergestellt, die auf einer Seite eine dreidimensionale Kühlkanalstruktur aufweist und auf der anderen Seite eine plane Rückseite. Dieser Ring wurde mit Phenolharz imprägniert, gehärtet und carbonisiert. Solche Verfahren sind in der WO 2019/228974 A1 oder der WO 2019/063833 A1 beschrieben. Im Anschluss wurde dieser Kühlkörper mittels einer Fügepaste mit einem carbonkurzfaserverstärkten Kohlenstoffgrundkörper, so wie er z.B. aus EP 1645671 bekannt ist, gefügt. Die verwendete Fügepaste umfasste eine Mischung aus 50 Gew.-% Flüssigresol und 50 Gew.-% SiC-Pulver, wobei dann diese Mischung mit 5 Gew.-% para-Toluolsulfonsäure als Kalthärter versetzt wurde. Dieser carbonkurzfaserverstärkten Kohlenstoffgrundkörper wurde dabei wie in EP 1645671 beschrieben durch Mischen von definiert geschnittenen Kohlenstofffaserbündeln mit einem Phenolharz und einem Graphit-Pulver in einem Intensivmischer der Firma Eirich gemischt. Die in der Mischung verwendeten Carbon-Kurzfasern wurden in einem zuvor durchgeführten Prozessschritt gegen den späteren Angriff des flüssigen Siliziums beim Silizierungsprozessschritt geschützt. Hierzu wurde wie in EP 1645671 beschrieben zuerst ein 120 cm breites Faserfilamentband kontinuierlich über ein Filmtransferverfahren mit einem Phenolharz getränkt und thermisch und unter Druck durch Vernetzung des Phenolharzes vorstabilisiert und anschließend mit einer Schneidvorrichtung auf definierte Faserbündel Geometrien mit einer Länge von 12 mm und Breite von 1,5 mm geschnitten. Nach dem Mischen wurde dann die erhaltene Pressmasse in einer Pressform bei einer Temperatur von 180 °C auf eine Dichte von 1,2 g/cm³ verdichtet und ausgehärtet. Der erhaltene CFK-Formkörper wurde anschließend bei 900°C unter Schutzgas carbonisiert und so ein poröser CFC-Formkörper erhalten der dann für die Fügung mit der 3D-gdruckten Form verwendet wurde. Abschließend wurde dieser Verbund mittels Flüssigsilizierung siliziert und so ein Kohlenstoff-Si-SiC-Verbundbauteil erhalten. Dieses Verbundbauteil weist so einen duktilen C/SiC Grundkörper auf und hat zusätzlich eine Kühlstruktur, welche zum einen durch den 3D Druck mit hoher Designfreiheit gestaltet werden kann und zum anderen aus Si-SiC besteht und dadurch eine besonders hohe Wärmeleitung aufweist

### Beispiel 6

Ähnlich wie in Beispiel 5 wurde ein carbonfaserverstärkter Kohlenstoffgrundkörper mit 3D gedruckten Kühlelementen ausgestattet. In den Kohlenstoffgrundkörper wurden zunächst Vertiefungen hineingebohrt. Mittels 3D Druck wurden Kühlelemente aus Kohlenstoffpulver hergestellt, so wie es in der WO 2017/089500 beschrieben ist, welche an der Unterseite einen kleinen Zylinder aufweisen. Diese 3D gedruckten Elemente wurden in die Bohrungen des Grundkörpers positioniert und anschließend der Verbund mit flüssigem Silizium infiltriert. Durch diese Positionierung kann auf ein Klebemittel verzichtet werden. Für die Fixierung der Kühlelemente in den Bohrungen kann optional eine phenolharzbasierte Fügepaste verwendet werden. Die Kühlelemente können aber auch nur eingesteckt werden. In diesem Fall kann die Verwendung von Kühlelementen mit mehr als einem Steckzylinder je Element die Fixierung erleichtern. Ein Vorteil des Stecksystems ist die lediglich punktuelle Verbindung der beiden Komponenten, welche thermomechanische Spannungen bei der Flüssigsilizierung reduziert. Zudem verbessert der vertikal eingebrachte Steckzylinder die Wärmeleitung durch das Bauteil. Ein exemplarisches Foto eines solchen Verbundes mit gestecktem Kühlelement ist in Figur 11 dargestellt.

## Patentansprüche

1. Verfahren zur Herstellung eines keramischen Faserverbundbauteils umfassend die folgenden Schritte:
a) Bereitstellen eines kohlenstoffbasierten und/oder keramischen, z.B. siliziumcarbidbasierten oder borcarbidbasierten Körpers, welcher mittels additiver Fertigung hergestellt worden ist,
b) Behandlung eines Verstärkungselements und/oder des bereitgestellten Körpers bei einer Temperatur von mindestens 600°C, bevorzugt mindestens 800°C, besonders bevorzugt mindestens 1400°C oder mindestens 1600°C bevor das Anbringen des Verstärkungselements an dem Körper erfolgt,
c) Anbringen eines faserhaltigen Verstärkungselements am Körper,
d) Verbinden von Körper und Verstärkungselement durch Infiltration mit Silizium oder mit einer siliziumhaltigen Verbindung und
e) falls in Schritt d) das Verbinden durch Infiltration mit einer siliziumhaltigen Verbindung erfolgt, wird eine anschließende Temperaturbehandlung bei größer 400 °C durchgeführt.

2. Verfahren nach Anspruch 1, wobei der in Schritt a) bereitgestellte Körper mittels Binder Jetting oder Pastenextrusion hergestellt worden ist.

3. Verfahren nach Anspruch 1, wobei das Verstärkungselement am Körper mit einem Fügebindemittel angebracht wird.

4. Verfahren nach Anspruch 3, wobei das Fügebindemittel ein Bindemittel ist, das beim Erhitzen in N₂-Atmosphäre eine Materialausbeute von mindestens 20 Gew.- % hat.

5. Verfahren nach Anspruch 4, wobei das Fügebindemittel eine Paste ist, die höchstens 10 % des Gesamtvolumens des nach Schritt c) vorliegenden Faserverbundbauteils einnimmt.

6. Verfahren nach Anspruch 1, wobei vor oder nach Schritt c) Körper und/oder Verstärkungselement durch CVI und/oder durch Infiltration mit carbonisierbarer Substanz und anschließender Carbonisierung verdichtet werden.

7. Verfahren nach Anspruch 1, wobei vor Schritt c) Körper und/oder Verstärkungselement mit Silizium oder mit einer siliziumhaltigen Verbindung infiltriert werden.

## Claims

1. Method for producing a ceramic fiber composite component, comprising the following steps:
a) providing a carbon-based and /or ceramic, e.g. silicon carbide-based or boron carbide-based body, which has been produced by means of additive manufacturing,
b) treating a reinforcing element and/or the provided body at a temperature of at least 600 °C, preferably at least 800 °C, particularly preferably at least 1400 °C, or at least 1600 °C, before the reinforcing element is attached to the body,
c) attaching a fiber-containing reinforcing element to the body,
d) connecting the body and reinforcing element by infiltration with silicon or with a silicon-containing compound, and
e) if, in step d), the connection is made by infiltration with a silicon-containing compound, a subsequent temperature treatment at more than 400 °C is carried out.

2. Method according to claim 1, wherein the body provided in step a) has been produced by means of binder jetting or paste extrusion.

3. Method of claim 1, wherein the reinforcing element is attached to the body with a bonding agent.

4. Method according to claim 3, wherein the bonding agent is a binding agent which, when heated in an N₂-atmosphere, has a material yield of at least 20% by weight.

5. Method according to claim 4, wherein the bonding agent is a paste which takes up at most 10% of the total volume of the fiber composite component present after step c).

6. Method according to claim 1, wherein before or after step c), the body and/or reinforcing element are densified by CVI and/or by infiltration with a carbonizable substance and subsequent carbonization.

7. Method according to claim 1, wherein, prior to step c), the body and/or reinforcing element are infiltrated with silicon or with a silicon-containing compound.

## Revendications

1. Procédé de fabrication d'un composant composite à base de fibres céramiques, comprenant les étapes suivantes:
a) fournissant un corps à base de carbone et/ou de céramique, par exemple à base de carbure de silicium ou de carbure de bore, qui a été fabriqué par fabrication additive,
b) soumettre un élément de renfort et/ou le corps prévu à une température d'au moins 600 °C, de préférence d'au moins 800 °C, de manière particulièrement préférée d'au moins 1400 °C, ou d'au moins 1600 °C, avant que l'élément de renfort ne soit fixé au corps,
c) en fixant un élément de renfort contenant des fibres au corps,
d) en reliant le corps et l'élément de renfort par infiltration de silicium ou d'un composé contenant du silicium, et
e) si, à l'étape d), la connexion est réalisée par infiltration d'un composé contenant du silicium, on procède ensuite à un traitement thermique à une température supérieure à 400 °C.

2. Procédé selon la revendication 1, dans lequel le corps obtenu à l'étape a) a été fabriqué par projection de liant ou par extrusion de pâte.

3. Procédé selon la revendication 1, dans lequel l'élément de renfort est fixé au corps à l'aide d'un agent de liaison.

4. Procédé selon la revendication 3, dans lequel l'agent de liaison est un agent de liaison qui, lorsqu'il est chauffé sous atmosphère de N₂₋, présente un rendement en matière d'au moins 20 % en poids.

5. Procédé selon la revendication 4, dans lequel l'agent de liaison est une pâte qui représente au plus 10 % du volume total du composant composite à base de fibres présent après l'étape c).

6. Procédé selon la revendication 1, dans lequel, avant ou après l'étape c), le corps et/ou l'élément de renfort sont densifiés par CVI et/ou par infiltration d'une substance carbonisable suivie d'une carbonisation.

7. Procédé selon la revendication 1, dans lequel, avant l'étape c), le corps et/ou l'élément de renfort sont infiltrés avec du silicium ou avec un composé contenant du silicium.
